# EUROPEAN PATENT APPLICATION

(11) **EP 2 018 062 A1**
(43) Date of publication of application: **21.01.2009**
(21) Application number: 07741196.5
(22) Date of filing: 06.04.2007
(51) Int. Cl.: H04N 7/173, H05B 37/02

(54) **DATA TRANSMISSION DEVICE, DATA TRANSMISSION METHOD, AUDIO-VISUAL ENVIRONMENT CONTROL DEVICE, AUDIO-VISUAL ENVIRONMENT CONTROL SYSTEM, AND AUDIO-VISUAL ENVIRONMENT CONTROL METHOD**

(30) Priority: 21.04.2006 JP 2006117346
(71) Applicant: Sharp Kabushiki Kaisha, Osaka-shi, Osaka 545-8522 (JP)
(72) Inventor: IWANAMI, Takuya, Chiba-shi, Chiba 266-0011 (JP); YAMAMOTO, Kenichiroh, Chiba-shi, Chiba 266-0005 (JP); YOSHIDA, Yasuhiro, Nara 631-0837 (JP); YOSHII, Takashi, Chiba-shi, Chiba 261-0001 (JP)
(74) Representative: Müller - Hoffmann & Partner
(86) International application number: PCT/JP2007/057760
(87) International publication number: WO 2007/123008

(57) **Abstract**

Provided is an audio visual environment control system capable of realizing optimal audio-visual environment illumination control in accordance with the illumination condition upon shooting of a display image. A data transmission device comprises: a data multiplexing portion for multiplexing the shooting illumination data indicating the illumination condition at the shooting of each scene of video data on the video data, and a transmitting portion for modulating and transmitting the video data on which the shooting illumination data is multiplexed. A data receiving apparatus which receives the data comprises: a data separating portion 22 for separating the shooting illumination data from the video data, a CPU 23 for controlling the illuminating light of an illuminating device 27 in accordance with the illumination data, and an illumination control data generating portion 24.

## Description

### TECHNICAL FIELD

The present invention relates to a data transmission device, a data transmission method, an audio-visual environment control device, an audio-visual environment control system, and an audio-visual environment control method that when an image is displayed on an image display device, can control illuminating light around the image display device by adapting illuminating light to the atmosphere and scene setting of a shooting scene of the image.

### BACKGROUND OF THE INVENTION

Techniques have been known that offer an audio-visual staging effect as to enhancing a scene of presence by adjusting illuminating light around the display device and projector to a displayed image, for example, when an image is displayed by an image display device, such as a television set, or a image is displayed by projecting using a projector.

For example, Japanese Laid-Open Patent Publication No. 02-158094 discloses light color variable illuminating apparatus that calculates a light-mixing illuminance ratio of three primary colors of a light source for each frame from a color signal (RGB) and a luminance signal (Y) of a displayed image on a color TV, and carries out light control by linking with the image. The light color variable illuminating apparatus extracts the color signal (RGB) and luminance signal (Y) from the display image on the color TV, calculates a proper light control illuminance ratio of trichromatic light (red light, green light, blue light) used for the light source from the color signal and luminance signal, determines the illuminance of trichromatic light according to the calculated illuminance ratio, mixes trichromatic light, and outputs it as illuminating light.

In another example, Japanese Laid-Open Patent Publication No. 02-253503 discloses an image staging illuminating apparatus that divides a TV image into a plurality of portions, and controls illumination around a divided portion by detecting the average hue of the divided portion. The image staging illuminating apparatus has an illuminating means that illuminates the periphery of a place where a color TV is located, divides an image displayed on the color TV into a plurality of portions, detects the average hue of a divided portion of an image corresponding to a portion illuminated by the illuminating means, and controls the illuminating means based on the detected hue.

In still another example, Japanese Laid-Open Patent Publication No. 03-184203 discloses a method which controls illumination so that the chromaticity and luminance of the wall behind the image display device becomes identical with the average chromaticity and average luminance of a whole screen or a background other than the skin-colored portion, which is the remaining image that pixels representing skin colored portions, such as a person's face, are excluded from an image displayed on the screen of the image display device, not by obtaining the average chromaticity and average luminance of the whole screen of an image display device, but by obtaining the average chromaticity and average luminance of the background extracting only the RGB signals and luminance signals of pixels of the background.

### DISCLOSURE OF THE INVENTION

### PROBLEMS TO BE SOLVED BY THE INVENTION

Usually, a scene of image is created as a segment of image based on a series of scene settings under a properly set illumination condition according to an intention of, for example, a producer (script writer, director, etc.). To enhance the feeling of being at a live performance or atmosphere at the time of viewing the image, illuminating light corresponding to the illumination condition at the time of shooting the scene of the displayed image should preferably be emitted in an audio-visual space.

The above described conventional audio-visual environment control device detects the characteristic quantity (color signal and luminance signal) for every frame (screen) of an image signal to be displayed, and controls illuminating light. Because of this, generation of illuminating light adapted to the condition of an image scene may become difficult, depending on the contents of a displayed image. For example, illuminating light of an improper color may be emitted on the periphery of a subject due to the effect of clothes the subject person wearing or of an artificial thing at the background of the subject. This makes impossible reproduction of the atmosphere of each scene or maintenance of a feeling of being at a live performance in each scene. Hence audio-visual environment illumination widely deviating from an illumination condition adopted at the time of shooting of each scene makes ever worse a feeling of being at a live performance.

According to the above conventional technique, the condition of illuminating light changes responding to a change in the luminance or hue of an image signal for each frame. When an extent of a luminance change or hue change between frames is greater, therefore, illuminating light changes in a complicated manner and a flicker gives a viewer unpleasantness. In addition, the fluctuation of illuminating light in response to a change in luminance or hue for each frame during display of one scene for which an illumination condition at the time of shooting is changeless hampers the atmosphere of each scene in a reverse effect, and is, therefore, not preferable.

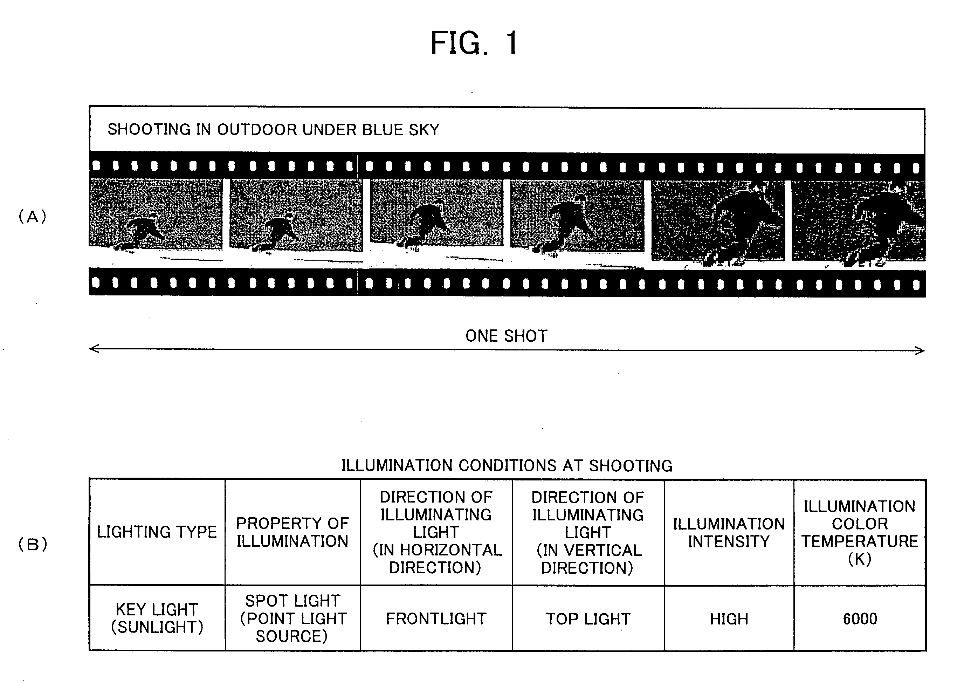

Fig. 1 is an explanatory view of an example of a problem of illumination control that is carried out according to the above conventional technique and shows some of a series of dynamic images. Fig. 1 (A) depicts an image scene that is shot according to a shooting condition that is an outdoor under daylight in a sunny day. This scene consists of images that are taken by a series of camerawork with no switching of a camera. In this scene, images of a skier who is gliding down a slope toward the vicinity of the camera are taken. The skier's wear is red, and the sky is blue.

Specifically, as shown in Fig. 1(B), this scene is shot under sunlight (natural light) in a sunny winter day, and sunlight is key light. The scene is thus shot under an illumination condition that the property of an illuminating light source of key light is spot light (point light source), the incident direction of illuminating light in the horizontal direction is the incident direction of frontlight, the incident direction of illuminating light in the vertical direction is the incident direction of top light, illumination intensity is high, and an illumination color temperature is about 6000 K.

In the image scene, an area of a blue sky as a background is large in initial frames, and an area of the skier' s red wear gradually grows bigger as the skier glides down a slope to approach the camera. In other words, the ratio of colors making up each frame changes as image frames proceed in the scene.

In this case, controlling illuminating light using the chromaticity or luminance of each frame causes illuminating light to change from illuminating light with strong blue tone to illuminating light with strong red tone. This means that even though the image scene is shot under the above illumination condition, illumination light with no consideration for the illumination condition at the time of shooting of the scene is generated and emitted. This rather hampers the atmosphere of the scene and gives a viewer unpleasantness. If the tone of illuminating light changes in a single segment of scene in which one scene setting (atmosphere) continues, the change in the tone hampers the atmosphere of the scene and gives a viewer unpleasantness.

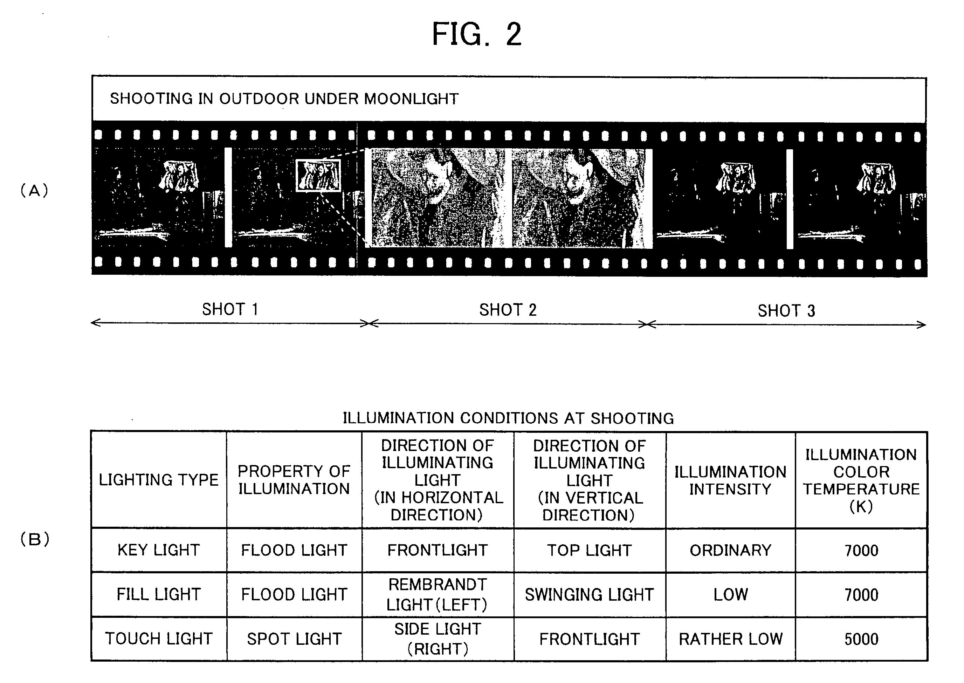

Fig. 2 is an explanatory view of another example of a problem of illumination control that is carried out according to the above conventional technique. Fig. 2(A) depicts an image scene that is shot according to a shooting condition that is an outdoor in moonlight night. This scene consists of three shots (1, 2, 3) where different types of camerawork are performed. In the shot 1, an image of a ghost is taken by long shooting by a camera. In the shot 2, an image of the ghost is taken by a close-up shooting. In the shot 3, the camera returns to the camera position in the shot 1. These shots are taken by different types of camerawork, but are intended to make up a single segment of scene in which one atmosphere continues.

As shown in Fig. 2 (B) , key light (upper row), fill light (middle row) , and touch light (lower row) are used in shooting of this scene. The key light is under an illumination condition that the property of an illuminating light source is flood light (plane light source), the incident direction of illuminating light in the horizontal direction is the direction of frontlight, the incident direction of illuminating light in the vertical direction is the direction of top light, illumination intensity is ordinary, and an illumination color temperature is about 7,000 K. The fill light is under an illumination condition that the property of an illuminating light source is flood light (plane light source), the incident direction of light in the horizontal direction is the direction of Rembrant light (left), the incident direction of light in the vertical direction is the direction of swinging light, illumination intensity is low, and an illumination color temperature is about 7,000 K. The touch light is under an illumination condition that the property of an illuminating light source is spot light (point light source), the incident direction of light in the horizontal direction is the direction of side light (right), the incident direction of light in the vertical direction is the direction of frontlight, illumination intensity is rather low, and an illumination color temperature is about 5,000 K.

In this case, since relatively dark images in a moonlight night continue in the shot 1, relatively dark illuminating light is produced when illuminating light is controlled according to the luminance or chromaticity of each image frame. When the shot 1 is switched to the shot 2, the image of ghost taken by close-up shooting is presented as a relatively bright image. At this time, if illuminating light is controlled for each frame by the above conventional technique, illuminating light control changes widely at shot switchover and a bright illuminating light is generated. Then, on switching to the shot 3, dark illuminating light similar to that for the shot 1 is resumed.

Thus, although a series of images are taken under the above illumination condition, illumination light with no consideration for the illumination condition at the time of shooting of the scene is generated and emitted. This rather hampers the atmosphere of the scene and gives a viewer unpleasantness. If illuminating light turns darker or brighter in a single segment of scene in which one scene setting (atmosphere) continues, the brightness change of illuminating light hampers the atmosphere of the scene and gives the viewer unpleasantness.

The present invention was conceived in view of the above problems, and it is therefore the object of the present invention to provide a data transmission device, a data transmission method, an audio-visual environment control device, an audio-visual environment control system, and an audio-visual environment control method that achieve illumination control for an optimum audio-visual environment that corresponds to illumination at the time of taking a displayed image.

### MEANS FOR SOLVING THE PROBLEMS

A first invention of the present application is a data transmission device that transmits image data composed of one or more scenes, wherein the shooting illumination data indicative of an illumination condition at the time of shooting of each of scenes of the image data is added to the image data and transmitted.

A second invention of the present application is the data transmission device, wherein the shooting illumination data is added to the image data scene by scene.

A third invention of the present application is the data transmission device, wherein the shooting illumination data is added to the image data shot by shot.

A fourth invention of the present application is the data transmission device, wherein the shooting illumination data is added to the image data frame by frame.

A fifth invention of the present application is the data transmission device, wherein the shooting illumination data at least contains data indicating a lighting type of illumination used for shooting of each scene.

A sixth invention of the present application is the data transmission device, wherein the shooting illumination data at least contains data indicating a property of illumination used for shooting of each scene.

A seventh invention of the present application is the data transmission device, wherein the shooting illumination data at least contains data indicating a direction of light of illumination used for shooting of each scene.

An eighth invention of the present application is the data transmission device, wherein the shooting illumination data at least contains data indicating intensity of light of illumination used for shooting of each scene.

A ninth invention of the present application is the data transmission device, wherein the shooting illumination data at least contains data indicating a chromaticity of light of illumination used for shooting of each scene.

A tenth invention of the present application is a data transmission device that transmits shooting illumination data indicating an illumination condition at the time of shooting of each of scenes comprising image data on the reception of a transmission request from outside, wherein the shooting illumination data is transmitted together with data indicating a timing of start of each of scenes comprising the image data.

An eleventh invention of the present application is the data transmission device, wherein the shooting illumination data at least contains data indicating a lighting type of illumination used for shooting of each scene.

A twelfth invention of the present application is the data transmission device, wherein the shooting illumination data at least contains data indicating a property of illumination used for shooting of each scene.

A thirteenth invention of the present application is the data transmission device, wherein the shooting illumination data at least contains data indicating a direction of light of illumination used for shooting of each scene.

A fourteenth invention of the present application is the data transmission device, wherein the shooting illumination data at least contains data indicating intensity of light of illumination used for shooting of each scene.

A fifteenth invention of the present application is the data transmission device, wherein the shooting illumination data at least contains data indicating a chromaticity of light of illumination used for shooting of each scene.

A sixteenth invention of the present application is an audio-visual environment control device comprising: a receiving means that receives image data to be displayed on a display device and shooting illumination data indicating an illumination condition at the time of shooting of each of scenes comprising the image data; and a control means that controls illuminating light from an illuminating device arranged around the display device, based on the shooting illumination data.

A seventeenth invention of the present application is the audio-visual environment control device, wherein the control means controls illuminating light from the illuminating device by switching illuminating light scene by scene in the image data.

An eighteenth invention of the present application is the audio-visual environment control device, wherein the control means controls illuminating light from the illuminating device using also a characteristic quantity of the image data, in addition to the shooting illumination data.

A nineteenth invention of the present application is the audio-visual environment control device, wherein the shooting illumination data at least contains data indicating a lighting type of illumination used for shooting of each scene.

A twentieth invention of the present application is the audio-visual environment control device, wherein the shooting illumination data at least contains data indicating a property of illumination used for shooting of each scene.

A twenty-first invention of the present application is the audio-visual environment control device, wherein the shooting illumination data at least contains data indicating a direction of light of illumination used for shooting of each scene.

A twenty-second invention of the present application is the audio-visual environment control device, wherein the shooting illumination data at least contains data indicating intensity of light of illumination used for shooting of each scene.

A twenty-third invention of the present application is the audio-visual environment control device, wherein the shooting illumination data at least contains data indicating a chromaticity of light of illumination used for shooting of each scene.

A twenty-fourth invention of the present application is an audio-visual environment control system comprising the audio-visual environment control device, and an illuminating device that is controlled by the audio-visual environment control device in emission of audio-visual environment illuminating light.

A twenty-fifth invention of the present application is a data transmission method for transmitting image data composed of one or more scenes, wherein shooting illumination data indicating an illumination condition at the time of shooting of each of scenes of the image data is added to the image data and transmitted.

A twenty-sixth invention of the present application is a data transmission method for transmitting shooting illumination data indicative of an illumination condition at the time of shooting of each of scenes comprising image data on the reception of a request from outside, wherein the shooting illumination data is transmitted together with data indicating a timing to start of each of scenes comprising the image data.

A twenty-seventh invention of the present application is an audio-visual environment control method that receives image data to be displayed on a display device and shooting illumination data indicative of an illumination condition at the time of shooting of each of scenes comprising the image data and controls illuminating light from an illuminating device disposed around the display device based on the shooting illumination data.

### EFFECTS OF THE INVENTION

The present invention realizes an optimum audio-visual environment that corresponds to an illumination condition at the time of taking an image.

### BRIEF DESCRIPTION OF DRAWINGS

[Fig. 1] Fig. 1 is an explanatory view of an example of a problem of illumination fluctuation caused by a conventional techniques;
[Fig. 2] Fig. 2 is an explanatory view of another example of a problem of illumination fluctuation caused by a conventional techniques;
[Fig. 3] Fig. 3 is a block diagram of a schematic configuration of a principal part of an image transmission device in an audio-visual environment control system according to a first embodiment of the present invention;
[Fig. 4] Fig. 4 is an explanatory view of an example of an output bit stream from the image transmission device in the audio-visual environment control system of the first embodiment of the present invention;
[Fig. 5] Fig. 5 is an explanatory view of an example of shooting illumination data in the audio-visual environment control system of the first embodiment of the present invention;
[Fig. 6] Fig. 6 is an explanatory view of classification of shooting illuminating light in the horizontal direction and in the vertical direction;
[Fig. 7] Fig. 7 is an explanatory view of the constituent parts of an image;
[Fig. 8] Fig. 8 is a block diagram of a schematic configuration of the essential parts of an image receiving apparatus in the audio-visual environment control system according to the first embodiment of the present invention;
[Fig. 9] Fig. 9 is an explanatory view of an example of an audio-visual environment space in the audio-visual environment control system of the first embodiment of the present invention;
[Fig. 10] Fig. 10 is an explanatory view of an example of control data in the audio-visual environment control system of the first embodiment of the present invention;
[Fig. 11] Fig. 11 is an explanatory view of a color reproduction range of illuminating light in the audio-visual environment control system of the first embodiment of the present invention;
[Fig. 12] Fig. 12 is an explanatory view of examples of the relation between illuminating light direction data and illuminating device IDs corresponding to the data;
[Fig. 13] Fig. 13 is an explanatory view of shooting illumination data corresponding to an image scene shown in Fig. 1;
[Fig. 14] Fig. 14 is an explanatory view of illumination control data that is generated based on shooting illumination data shown in Fig. 11 in the audio-visual environment control system of the first embodiment of the present invention;
[Fig. 15] Fig. 15 is an explanatory view of an audio-visual environment space that is realized based on the illumination control data shown in Fig. 14 in the audio-visual environment control system of the first embodiment of the present invention;
[Fig. 16] Fig. 16 is an explanatory view of shooting illumination data corresponding to an image scene shown in Fig. 2;
[Fig. 17] Fig. 17 is an explanatory view of illumination control data that is generated based on the shooting illumination data shown in Fig. 16 in the audio-visual environment control system of the first embodiment of the present invention;
[Fig. 18] Fig. 18 is an explanatory view of an audio-visual environment space that is realized based on the illumination control data shown in Fig. 17 in the audio-visual environment control system of the first embodiment of the present invention;
[Fig. 19] Fig. 19 is a block diagram of a schematic configuration of the essential parts of an image receiving apparatus in an audio-visual environment control system according to a second embodiment of the present invention;
[Fig. 20] Fig. 20 is a block diagram of an illumination control data generating portion of Fig. 19;
[Fig. 21] Fig. 21 is an explanatory view of a color reproduction range of illuminating light in the audio-visual environment control system of the second embodiment of the present invention;
[Fig. 22] Fig. 22 is a block diagram of a schematic configuration of the essential parts of an external server in an audio-visual environment control system according to a third embodiment of the present invention;
[Fig. 23] Fig. 23 is an explanatory view of an example of a shooting illumination data storage table in the audio-visual environment control system of the third embodiment of the present invention;
[Fig. 24] Fig. 24 is an explanatory view of another example of the shooting illumination data storage table in the audio-visual environment control system of the third embodiment of the present invention;
[Fig. 25] Fig. 25 is an explanatory view of still another example of the shooting illumination data storage table in the audio-visual environment control system of the third embodiment of the present invention;
[Fig. 26] Fig. 26 is an explanatory view of still another example of the shooting illumination data storage table in the audio-visual environment control system of the third embodiment of the present invention;
[Fig. 27] Fig. 27 is a block diagram of a schematic configuration of the essential parts of an image receiving apparatus in the audio-visual environment control system of the third embodiment of the present invention;
[Fig. 28] Fig. 28 is a block diagram of a schematic configuration of the essential parts of an image receiving apparatus in an audio-visual environment control system according to a fourth embodiment of the present invention; and
[Fig. 29] Fig. 29 is a block diagram of an illumination control data generating portion of Fig. 28.

### PREFERRED EMBODIMENTS OF THE INVENTION

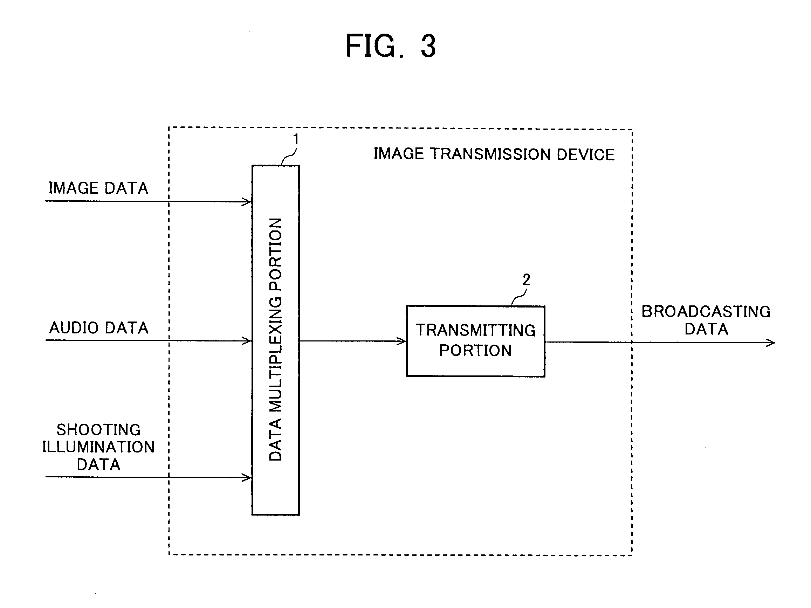

Fig. 3 is a block diagram of a schematic configuration of the essential parts of an image transmission device (data transmission device) for description of an audio-visual environment control system according to a first embodiment of the present invention. As shown in Fig. 3, the image transmission device of the first embodiment includes a data multiplexing portion 1 that multiplexes image data, audio data, and shooting illumination data supplied as additional data by dividing each of them in a transport stream packet (TSP) format, and a transmitting portion 2 that modulates output data from the data multiplexing portion 1 after adding an error correction code, etc., to the output data and sends the modulated data to a transmission path as broadcasting data.

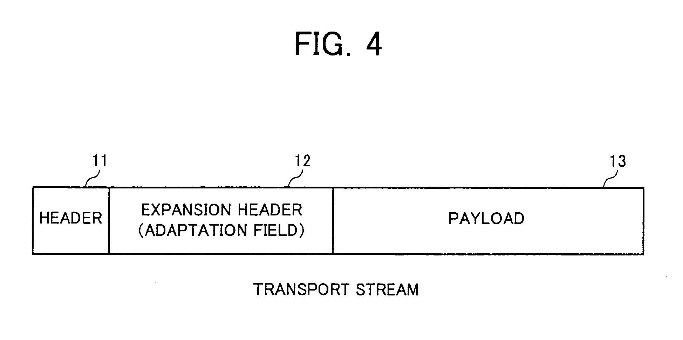

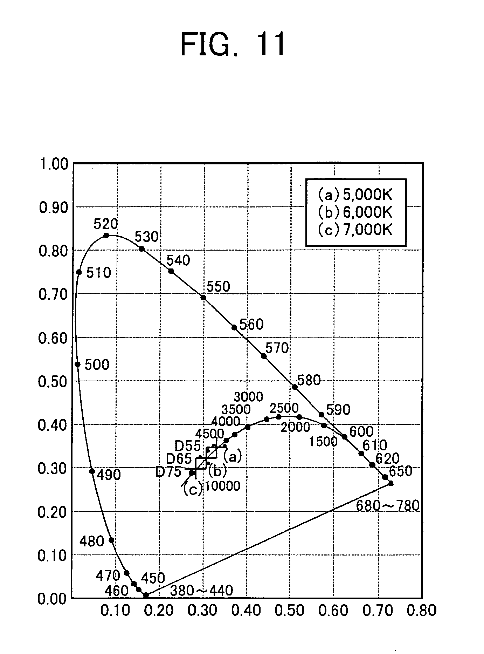

Fig. 4 is an explanatory view of a schematic configuration of a transport stream packet (TSP) that is a packet format standardized by MPEG2 (Moving Picture Experts Group 2) Systems. In Fig. 4, 11 denotes a header containing the description of data specified by MPEG2 including the data contents of the TPS, 12 denotes an extension header (adaptation field) allowed to contain the description of data determined by a data sender, and 13 denotes a payload composed of image data, audio data, etc. In the present embodiment, for example, the transport stream packet is configured so that image data and audio data are transmitted in the portion of the payload 13 and shooting illumination data, etc., as additional data is transmitted in the portion of the extension header (adaptation field) 12. Image data, audio data, and shooting illumination data may be transmitted in the form of different data streams by data multiplexing.

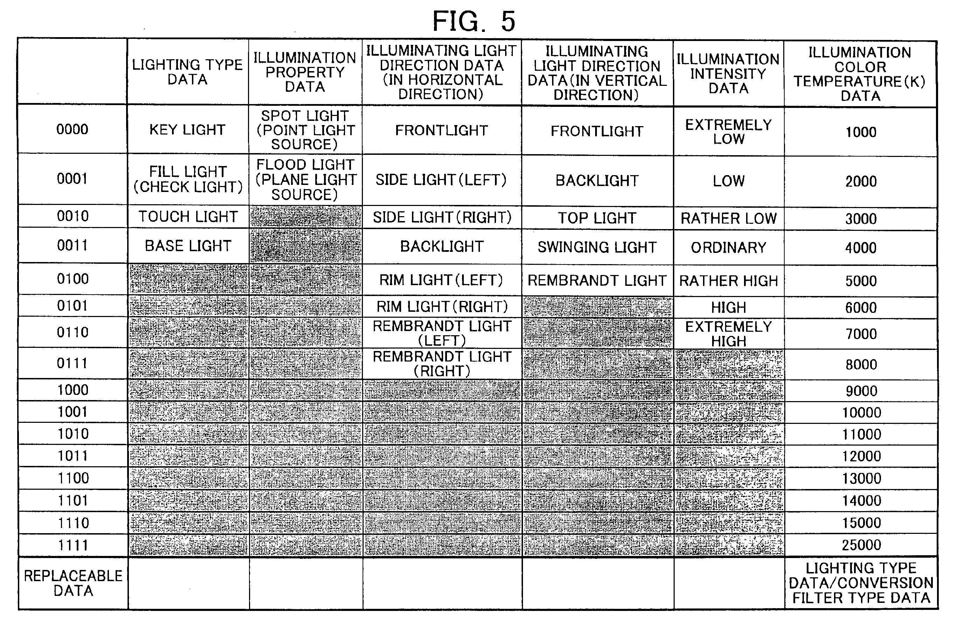

Shooting illumination data indicating an illumination condition at the time of shooting of each scene of image data will be described in detail with reference to Fig. 5. In the present embodiment, shooting illumination data includes lighting type data representing the lighting type of illumination used for shooting of each scene, illumination property data representing the property of an illuminating light source used for shooting of each scene, illuminating light direction data (in the horizontal direction)representing the incident direction (in the horizontal direction) of illuminating light used for shooting of each scene, illuminating light direction data (in the vertical direction) representing the incident direction (in the vertical direction) of illuminating light used for shooting of each scene, illumination intensity data representing the intensity of illuminating light used for shooting of each scene, and illumination color temperature data representing the chromaticity of illuminating light used for shooting of each scene. Each data is useful for estimating an illumination environment at the time of shooting of each scene and creating staging effects of an atmosphere or the feeling of being at a live performance in each scene with illuminating light. Each piece of data will then be described.

Key light, fill light (check light), touch light, and base light are known as types of lighting for shooting illumination that are frequently used in general. Key light originates from a main light source, serving as main light based on the setup of a scene. For example, when shooting is carried out on outdoor location in the daytime, key light is usually equivalent to sunlight. Fill light (check light) originates from an auxiliary light source, serving as light that erases a shadow, etc., to give a subject brightness or luster. For example, on daytime outdoor location, sunlight is reflected by a reflective plate to hit a dark spot. In this case, reflected sunlight is equivalent to fill light.

Touch light is light that separates a subject from a background or gives the effect that the image looks three dimensional, and that is effective when emitted diagonally from the back of the subject to express darkness. Base light is light that equally brightens the entire part of a subject or moderates strong contrast.

Usually, shooting is carried out using a combination of one or more types of lighting. A feeling of being at a live performance of a displayed image scene, therefore, can be improved by controlling audio-visual environment illumination, which will be described later, adapting to an illumination condition for each lighting type. Thus, in the present embodiment, shooting illumination data contains the information expressed in two bits indicating which type of light, key light, fill light (check light), touch light, or base light illuminating light at the time of shooting of each image scene belongs to. The information expressed in two bits is contained in lighting type data.

The property of an illuminating light source to be used is determined for each lighting type. The property of an illuminating light source used at ordinary shooting is, for example, spot light (point light source) or flood light (plane light source). Spot light (point light source) is illumination that shows a clear directionality of light and that creates a distinct shadow. Flood light (plane light source), on the other hand, is illumination that offers uniform brightness over a space as a whole, and that blurs a shadow to give a weak contrast in brightness.

Usually, the property of an illuminating light source is determined for each lighting type. A feeling of being at a live performance of a displayed image scene, therefore, can be improved by controlling audio-visual environment illumination, which will be described later, adapting to the property of the illuminating light source. For example, when illuminating light by spot light (point light source) is reproduced, an illumination range by an audio-visual environment illuminating device may be narrowed down, or when illuminating light by flood light (plane light source) is reproduced, the illumination range by the audio-visual environment illuminating device may be broadened.

Thus, in the present embodiment, shooting illumination data contains the information expressed in one bit indicating which of the light, a spot light (point light source) or a flood light (plane light source), the property of an illuminating light source used at shooting of each image scene belongs to. The information expressed in one bit is contained in illumination property data.

The direction of illuminating light is determined for each lighting type. A feeling of being at a live performance of a displayed scene, therefore, can be improved by controlling audio-visual environment illumination, which will be described later, adapting to the direction of the illuminating light. Specifically, independently controlling each of a plurality of illuminating devices arranged above/below and left/right of an image display device enables precise reproduction of a shooting illumination environment at the time of shooting.

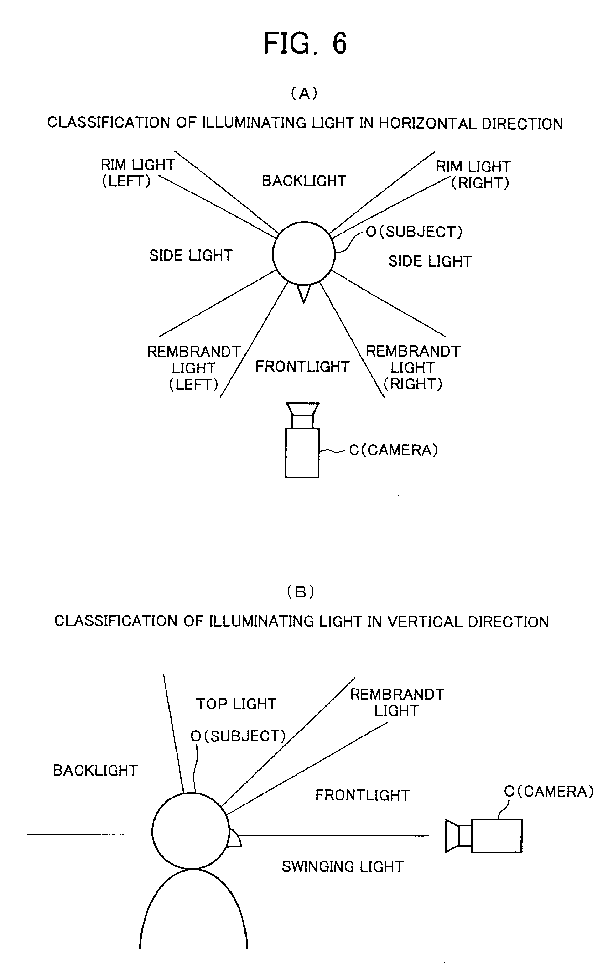

In Fig. 6, O denotes a subject, and C denotes a camera. Illuminating light is classified in the horizontal direction into frontlight, side light (left and right), backlight, rim light (left and right), and Rembrandt light (left and right), as shown in Fig. 6(A). Frontlight is a light coming in from the front side, offering brightness most effectively. Side light emphasizes the effect that an image looks three dimensional but creates strong shade and shadow, thus offering an intense impression with high contrast. Backlight creates a silhouette effect of silhouetting a subject, coming in from the back side to bring a fantastic effect. Rim light is light traveling in a semi-backlight direction, being used for emphasizing the effect that an image looks three dimensional or expressing the detail of hairs. Rembrandt light is light having an angle of 45 degrees against a subject, being capable of expressing the feature of a person' s face in a finest manner to present a beautiful appearance.

Illuminating light is classified in the vertical direction into frontlight, backlight, top light, swinging light, and Rembrandt light, as shown in Fig. 6(B). Frontlight is a light coming in from the front side, offering brightness most effectively. Backlight creates a silhouette effect of silhouetting a subject, coming in from the back side to bring a fantastic effect. Top light is a light coming in from almost right above a subject, and used for characteristic image expression. Swinging light is a light coming in from the front of and below a subject, being used for a purpose of achieving a special effect. Rembrandt light is a light having an angle of 45 degrees against a subject, being capable of expressing the feature of a person's face in a finest manner to present a beautiful appearance.

Thus, in the present embodiment, shooting illumination data contains the information expressed in three bits indicating which incident direction of the light, frontlight, side light (left), side light (right), backlight, rim light (left), rim light (right), Rembrandt light (left), or Rembrandt light (right), the incident direction of illuminating light (in the horizontal direction) at the time of shooting of each image scene belongs to. The information expressed in three bits is contained in illuminating light direction data (in the horizontal direction). Shooting illumination data also contains the information expressed in three bits indicating which incident direction of the light, frontlight, backlight, top light, stirring light, or Rembrandt light, the incident direction of illuminating light (in the vertical direction) at the time of shooting of each image scene belongs to. The information expressed in three bits is contained in illuminating light direction data (in the vertical direction).

The intensity and chromaticity of illuminating light is determined for each lighting type. The feeling of being at a live performance for a displayed image scene, therefore, can be improved by controlling audio-visual environment illumination, which will be described later, adapting to the intensity and chromaticity of the illuminating light. Shooting illumination data thus contains the information expressed in three bits indicating which intensity level, extremely low, low, rather low, normal, rather high, high, or extremely high, the intensity of illuminating light at the time of shooting of each image scene belongs to. The information expressed in three bits is contained in illumination intensity data. Shooting illumination data also contains the information expressed in four bits indicating which color temperature, 1,000 (K), 2,000 (K), 3,000 (K), 4,000 (K), 5,000 (K), 6,000 (K), 7,000 (K), 8,000 (K), 9,000 (K), 10,000 (K), 11,000 (K), 12,000 (K), 13,000 (K), 14,000 (K), 15,000 (K), and 25, 000 (K), the color temperature (K) of illuminating light at the time of shooting of each scene belongs to. The information expressed in four bits is contained in illumination color temperature data.

Various types of data contained in shooting illumination data are not limited to the above data. For example, a description of illumination color temperature data directly indicating the color temperature of shooting illuminating light may be replaced with a description of lighting equipment type data (a sodium lamp, mercury lamp, LED, fluorescent lamp, candle, metal halide lamp, etc.), color conversion filter type data, etc., to determine the color temperature of illuminating light at the time of shooting from the replacing data. Not only the data of color temperature of shooting illuminating light, but also the data directly indicating a chromaticity may be described in shooting illumination data.

The above shooting illumination data is made based on a script (also referred to as scenario or playbook), and can be made using a lighting plan, etc., that is adopted at a shooting spot. This case, therefore, saves work of newly making shooting illumination data.

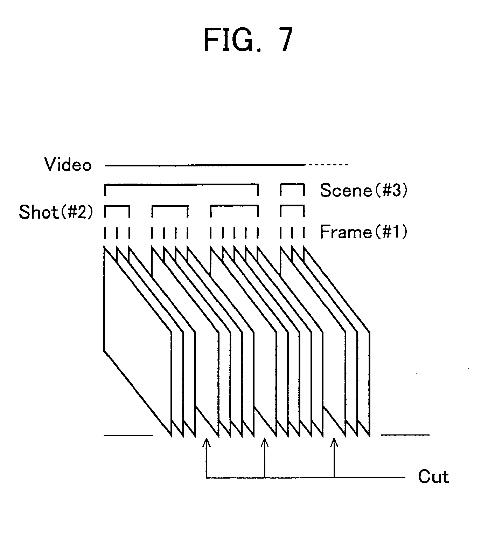

Fig. 7 is an explanatory view of constituent elements of a video image. The structure of a video image containing scenes and shots will be described with reference to Fig. 7. Image data structuring a series of dynamic images is considered to be of a three-layer structure, as shown in Fig. 7. A first layer (#1) structuring a video is a frame, which is a physical layer and represents a single two-dimensional image. Frames are usually produced at a rate of 30 frames per second. A second layer (#2) is a shot, which is a train of frames taken by a single camera. A third layer (#3) is a scene, which is a train of shots having connections to compose a story.

The above shooting illumination data can be added to the image data frame by frame, shot by shot, or scene by scene. At the least, adding shooting illumination data scene by scene enables achievement of efficient control over audio-visual environment illumination, which will be described later. Adding shooting illumination data frame by frame, moreover, allows more detailed control over audio-visual environment illumination. For example, shooting illumination data may be added only to a specific frame (scene switching frame, etc.) according to an intention of an image producer (script writer, director, etc.).

Adding shooting illumination data shot by shot enables achievement of proper control over audio-visual environment illumination, for example, even in a case where an outdoor shot and an indoor shot are included in the same scene. Besides, shooting illumination data may be added in each of GOPs (Group of Pictures) that is a unit of random access to image data.

An image receiving apparatus (data receiving apparatus) will then be described. The image receiving apparatus receives broadcasting data sent from the above image transmission device to display and reproduce images and audio, and controls audio-visual environment illumination upon displaying and reproducing images and audio.

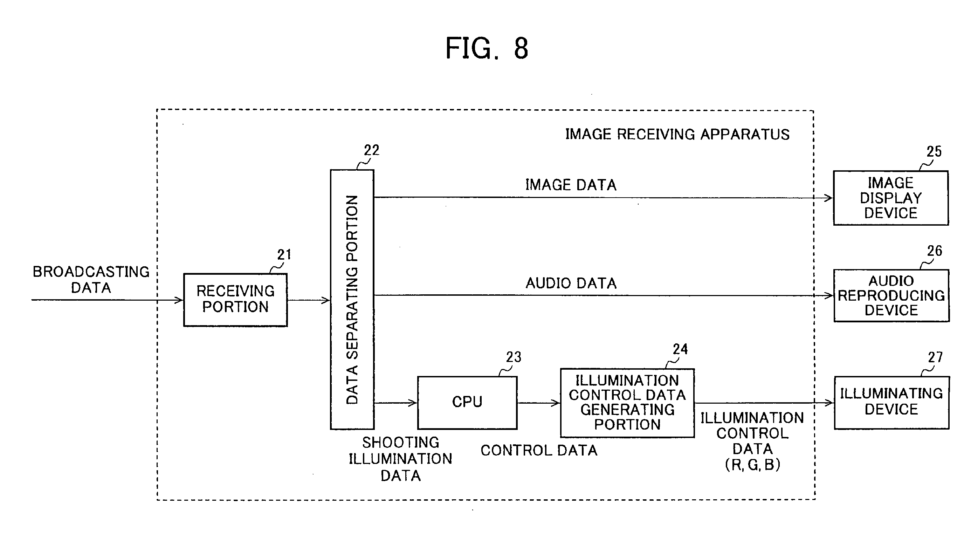

Fig. 8 is a block diagram of a schematic configuration of the essential parts of the image receiving apparatus in the audio-visual environment control system according to the first embodiment of the present invention. As shown in Fig. 8, the image receiving apparatus of the first embodiment includes a receiving portion 21 that receives, demodulates input broadcasting data from a transmission path and corrects errors in the data, a data separating portion 22 that separates and extracts image data output to an image display device 25, audio data output to an audio reproducing device 26, and shooting illumination data as additional data, from output data from the receiving portion 21, a CPU 23 that receives shooting illumination data separated at the data separating portion 22 to output control data on illumination adapted to the scene situation (atmosphere) of each of scenes making up the image data, and an illumination control data generating portion 24 that outputs illumination control data (RGB data) corresponding to control data output from the CPU 23 to illuminating devices 27 that illuminate an audio-visual environment space.

The illuminating devices 27 are arranged around the image display device 25, and are composed of LEDs that emit light having a given hue, e.g., light having three primary colors of red, green, and blue. The illuminating devices 27 are required only to have a structure to be able to control the illumination and brightness of the ambient environment of the image display device 25, and may be composed of a white LED and a color filter, a combination of a white electric lamp or fluorescent lamp and a color filter, or a color lamp, etc., not limited to a combination of LEDs emitting a given color, as described above. Arrangement of one or more illuminating devices 27 is sufficient.

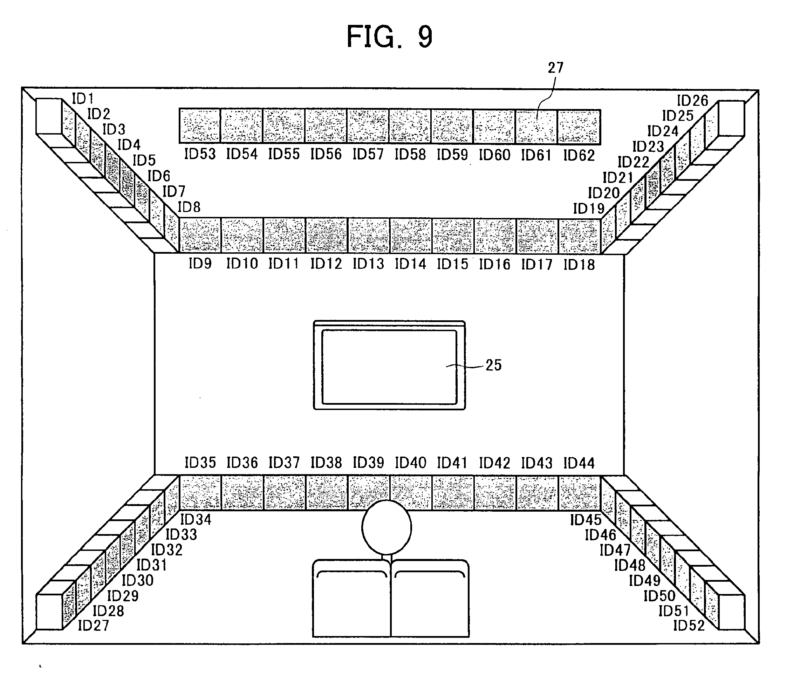

In the present embodiment, 62 (ID1 to ID62) illuminating devices 27, each of which can be controlled independently, are arranged in an audio-visual environment space in which the image display device 25 is disposed, as shown in Fig. 9. An ID is attached to each of arranged 62 illuminating devices, among which illuminating devices ID1 to ID8 emit light from above on a left side wall of the image display device 25, illuminating devices ID9 to ID18 emit light from above on a back side wall of the image display device 25, illuminating devices ID19 to ID26 emit light from above on a right side wall of the image display device 25, illuminating devices ID27 to ID34 emit light from below on the left side wall of the image display device 25, illuminating devices ID35 to ID44 emit light from below on the back side wall of the image display device 25, illuminating devices ID45 to ID52 emit light from below on the right side wall of the image display device 25, and illuminating devices ID53 to ID62 emit light on a sealing wall of the image display device 25.

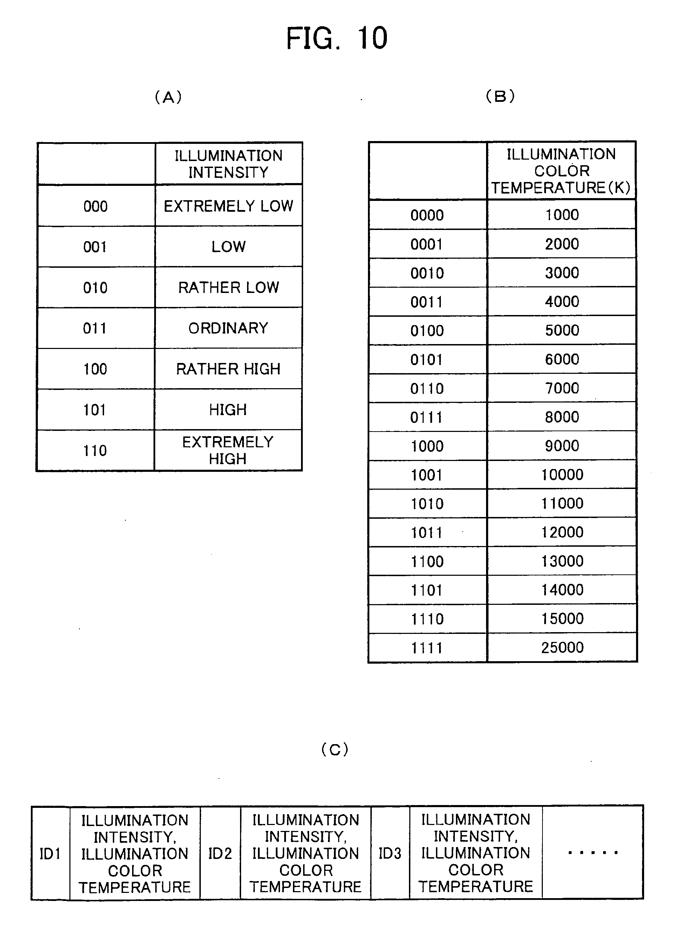

The CPU 23 determines the intensity and color temperature (a point on a blackbody locus) of illuminating light for each illuminating device ID and outputs the determined intensity and color temperature to the illumination control data generating portion 24 as control data to reproduce an illumination environment at the time of shooting of each scene from shooting illumination data described in Fig. 5 using audio-visual environment illumination by the illuminating devices 27. In the present embodiment, based on various types of data contained in shooting illumination data, the CPU 23 generates, for example, control data expressing illumination intensities of 7 levels, as shown in Fig. 10(A), and illumination color temperatures of 16 levels, as shown in Fig. 10(B) for each illuminating device with each ID. The CPU 23 generates control data for each illuminating device ID to reproduce an illumination environment at the time of shooting by adding data on an illumination condition for each lighting type to data on illumination intensity and illumination color temperature.

A blackbody is an ideal body that absorbs energy completely. Light emitted from the blackbody changes in color from red to yellow to white as the temperature of the blackbody increases. The temperature of the blackbody expressed in Kelvin temperature scale is referred to as color temperature. The color temperature and a color locus (blackbody locus) are plotted on an xy chromaticity graph, as shown in Fig. 11. When the color of a light source is not on the blackbody locus, the temperature of the blackbody that does not completely match the black locus but is closest thereto is referred to as "correlated color temperature". Generally, the correlated color temperature is expressed with a deflection (Δuv) from the blackbody locus.

The illumination control data generating portion 24 generates RGB data corresponding to control data (intensity and color temperature) from the CPU 23, as shown in Fig. 10 (C), and outputs the RGB data to the illuminating devices 27. Specifically, RGB data for each illuminating device ID is output to the illuminating device with the ID corresponding to the RGB data. This enables illumination control for an optimum audio-visual environment that corresponds to an illumination condition at the time of taking a display image. The CPU 23 contains prerecorded data on the installation position of each illuminating device (relative position to the display screen of the image display device), and generates control data for each illuminating device to reproduce an illumination environment at the time of shooting by using this position data and shooting illumination data.

For example, when illumination property data indicates spot light (point light source), illuminating light having given intensity and color temperature is emitted from N illuminating devices grouping around an illuminating device with an ID that is located in the incident direction of illuminating light as spot light. When illumination property data indicates flood light (plane light source), illuminating light having given intensity and color temperature is emitted from an extensive group of M (M>N) illuminating devices including an illuminating device with an ID that is located in the incident direction of illuminating light as flood light.

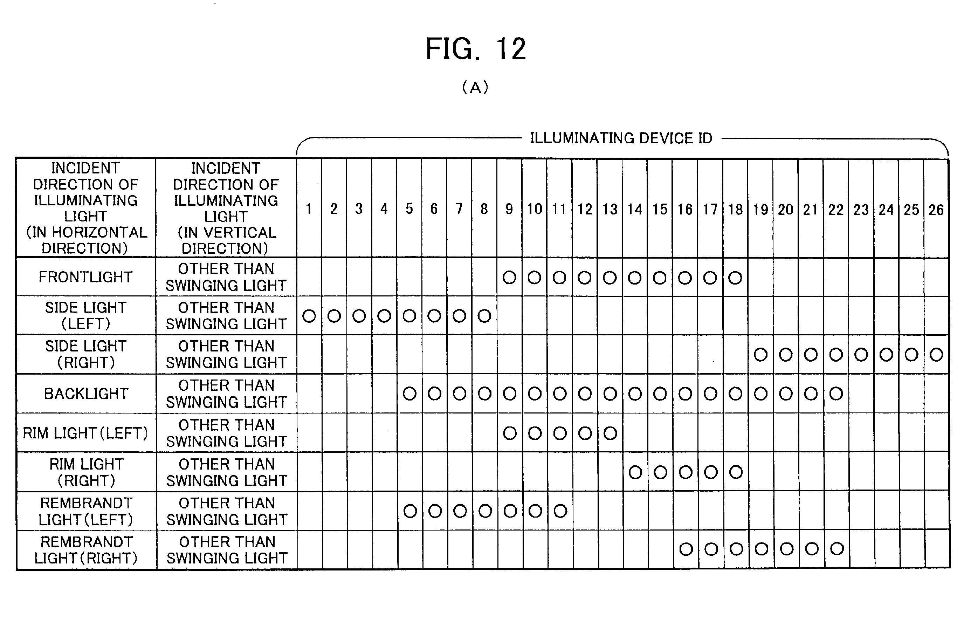

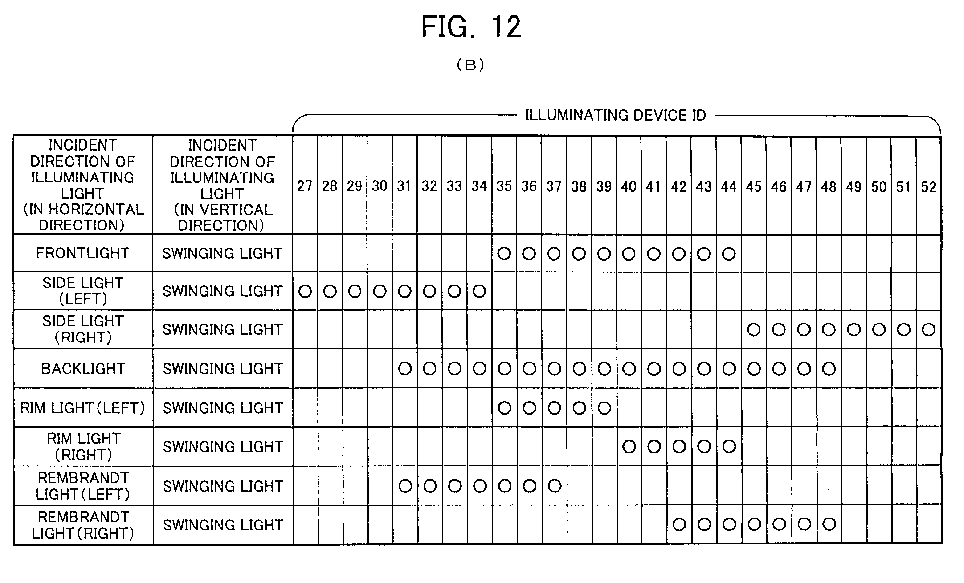

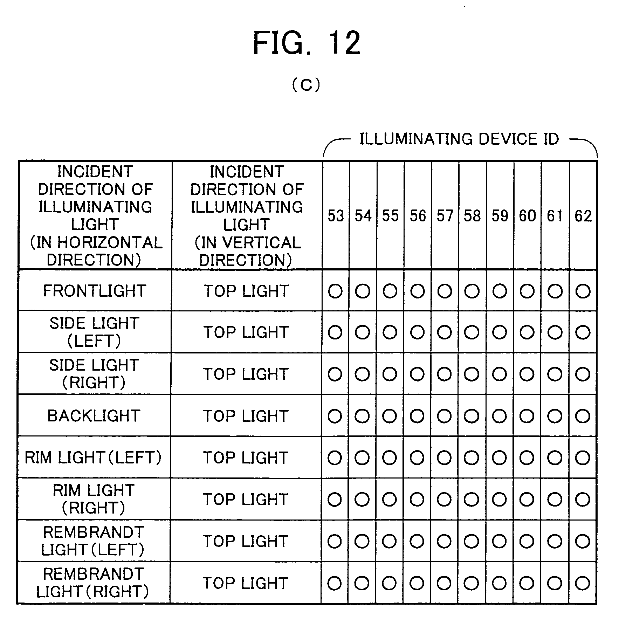

Fig. 12 depicts examples of the relation between the incident direction of shooting illumination light and illuminating device IDs corresponding to the incident direction. Referring to Fig. 12(A), when the direction of illuminating light in the horizontal direction is the direction of frontlight and the direction of illuminating light in the vertical direction is the direction of light other than swinging light, illuminating devices ID9 to ID18 are used to reproduce this illuminating light. When the direction of illuminating light in the horizontal direction is the direction of side light (left) and the direction of illuminating light in the vertical direction is the direction of light other than swinging light, illuminating devices ID1 to ID8 are used to reproduce this illuminating light. When the direction of illuminating light in the horizontal direction is the direction of side light (right) and the direction of illuminating light in the vertical direction is the direction of light other than swinging light, illuminating devices ID19 to ID26 are used to reproduce this illuminating light.

When the direction of illuminating light in the horizontal direction is the direction of backlight and the direction of illuminating light in the vertical direction is the direction of light other than swinging light, illuminating devices ID5 to ID22 are used to reproduce this illuminating light. When the direction of illuminating light in the horizontal direction is the direction of rim light (left) and the direction of illuminating light in the vertical direction is the direction of light other than swinging light, illuminating devices ID9 to ID13 are used to reproduce this illuminating light. When the direction of illuminating light in the horizontal direction is the direction of rim light (right) and the direction of illuminating light in the vertical direction is the direction of light other than swinging light, illuminating devices ID14 to ID18 are used to reproduce this illuminating light.

When the direction of illuminating light in the horizontal direction is the direction of Rembrandt light (left) and the direction of illuminating light in the vertical direction is the direction of light other than swinging light, illuminating devices ID5 to ID11 are used to reproduce this illuminating light. When the direction of illuminating light in the horizontal direction is the direction of Rembrandt light (right) and the direction of illuminating light in the vertical direction is the direction of light other than swinging light, illuminating devices ID16 to ID22 are used to reproduce this illuminating light.

As shown in Fig. 12(B), when the direction of illuminating light in the horizontal direction is the direction of frontlight and the direction of illuminating light in the vertical direction is the direction of swinging light, illuminating devices ID35 to ID44 are used to reproduce this illuminating light. When the direction of illuminating light in the horizontal direction is the direction of side light (left) and the direction of illuminating light in the vertical direction is the direction of swinging light, illuminating devices ID27 to ID34 are used to reproduce this illuminating light. When the direction of illuminating light in the horizontal direction is the direction of side light (right) and the direction of illuminating light in the vertical direction is the direction of swinging light, illuminating devices ID45 to ID52 are used to reproduce this illuminating light.

When the direction of illuminating light in the horizontal direction is the direction of backlight and the direction of illuminating light in the vertical direction is the direction of swinging light, illuminating devices ID31 to ID48 are used to reproduce this illuminating light. When the direction of illuminating light in the horizontal direction is the direction of rim light (left) and the direction of illuminating light in the vertical direction is the direction of swinging light, illuminating devices ID35 to ID39 are used to reproduce this illuminating light. When the direction of illuminating light in the horizontal direction is the direction of rim light (right) and the direction of illuminating light in the vertical direction is the direction of swinging light, illuminating devices ID40 to ID44 are used to reproduce this illuminating light.

When the direction of illuminating light in the horizontal direction is the direction of Rembrandt light (left) and the direction of illuminating light in the vertical direction is the direction of swinging light, illuminating devices ID31 to ID37 are used to reproduce this illuminating light. When the direction of illuminating light in the horizontal direction is the direction of Rembrandt light (right) and the direction of illuminating light in the vertical direction is the direction of swinging light, illuminating devices ID42 to ID48 are used to reproduce this illuminating light.

When the direction of illuminating light in the vertical direction is the direction of top light, illuminating devices ID53 to ID62 are used to reproduce this illuminating light regardless of the direction of illuminating light in the horizontal direction, as shown in Fig. 12 (C). In this manner, the plurality of illuminating devices arranged above/below and left/right to the image display device 25 are each controlled independently based on shooting illumination data. As a result, an illumination condition at a shooting scene is reproduced in detail to be able to improve the feeling of being at a live performance at image viewing.

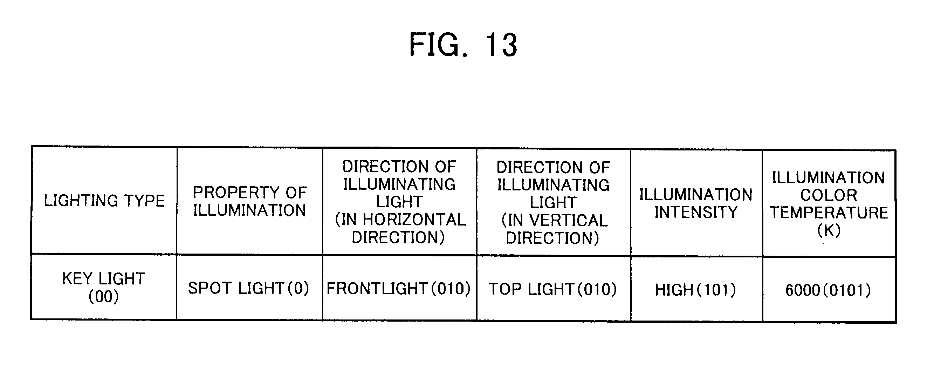

A specific example of illumination control corresponding to shooting illumination data will then be described with reference to Fig. 13. Fig. 13 depicts shooting illumination data corresponding to the image scene described in Fig. 1. The image scene is shot under an illumination condition given by illuminating light consisting of key light (sunlight) only that the property of an illuminating light source is spot light (point light source), the incident direction of illuminating light in the horizontal direction is the direction of frontlight, the incident direction of illuminating light in the vertical direction is the direction of top light, illumination intensity is high, and an illumination color temperature is about 6,000 K.

Based on this shooting illumination data, the CPU 23 generates control data for controlling the illuminating devices 27 so that illuminating light having high illumination intensity and an illumination color temperature of about 6, 000 K (represented by a point (b) on the xy chromaticity graph of Fig. 11) is emitted from the illuminating devices ID9 to ID18, which emit light from above on the back wall of the image display device 25, and from the illuminating devices ID53 to ID62, which emit light on the ceiling wall of the image display device 25.

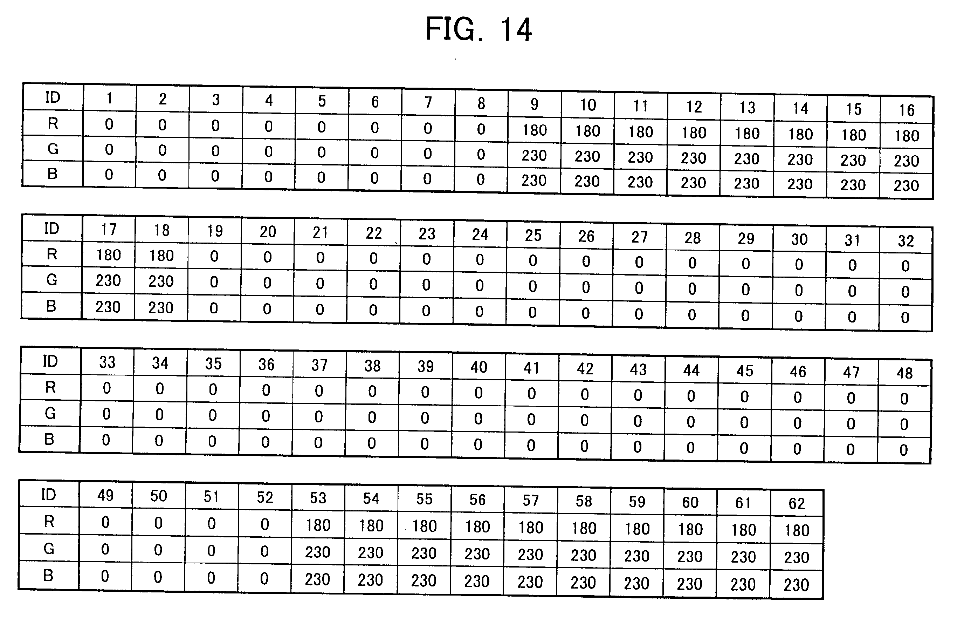

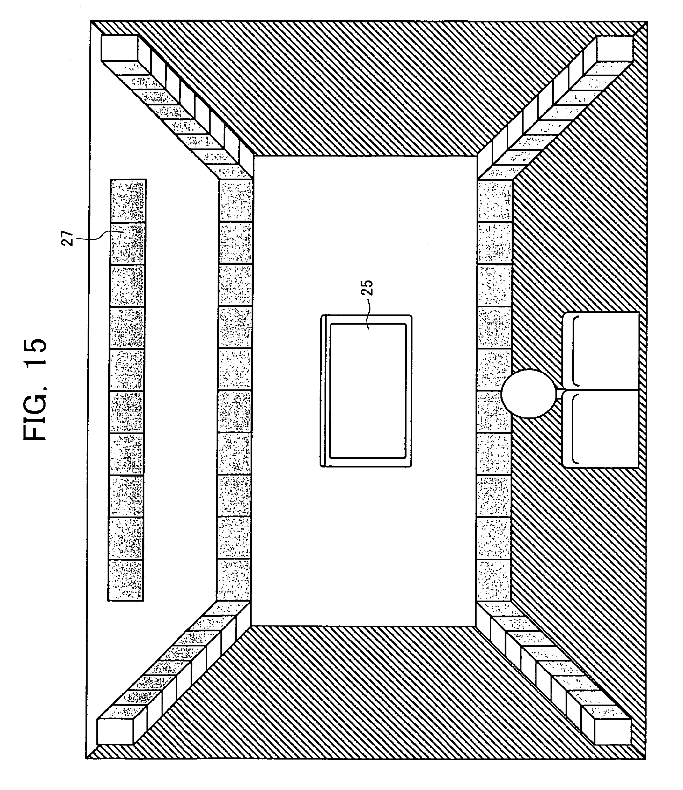

Receiving the control data from the CPU 23, the illumination control data generating portion 24 outputs illumination control data (RGB data) shown in Fig. 14. As a result, the illuminating devices ID9 to ID18 and ID53 to ID62 emit illuminating light to properly illuminate the back wall and ceiling of the image display device 25, as shown in Fig. 15. This reproduces an illumination environment at the time of shooting of the above display image scene in an audio-visual space, thus improves the feeling of being at a live performance at image viewing.

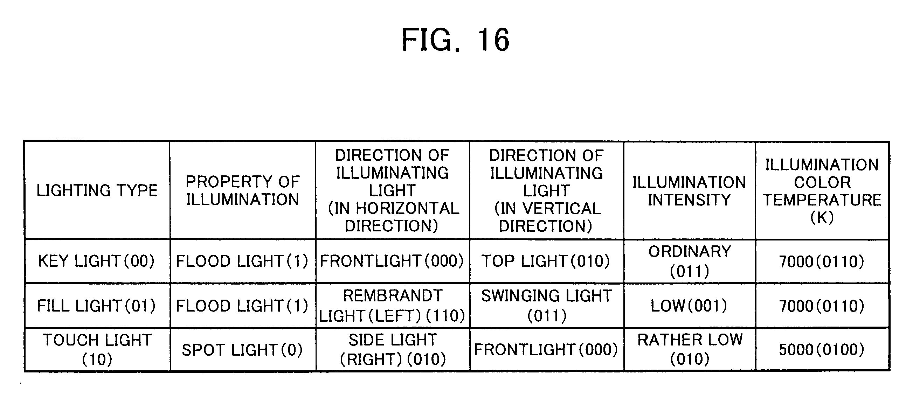

Fig. 16 is shooting illumination data corresponding to the image scene described in Fig. 2. The image scene is shot under an illumination condition given by a combination of key light (upper row), fill light (middle row), and touch light (lower row). According to the illumination condition, the key light serves as illuminating light such that the property of an illuminating light source is flood light (plane light source), the incident direction of illuminating light in the horizontal direction is the direction of frontlight, the incident direction of illuminating light in the vertical direction is the direction of top light, illumination intensity is ordinary, and an illumination color temperature is about 7,000 K, and the fill light serves as illumination light such that the property of an illuminating light source is flood light (plane light source), the incident direction of illuminating light in the horizontal direction is the direction of Rembrandt light (left), the incident direction of illuminating light in the vertical direction is the direction of swinging light, illumination intensity is low, and an illumination color temperature is about 7,000 K, and the touch light serves as illumination light such that the property of an illuminating light source is spot light (point light source), the incident direction of illuminating light in the horizontal direction is the direction of side light (right), the incident direction of illuminating light in the vertical direction is the direction of frontlight, illumination intensity is rather low, and an illumination color temperature is about 5,000 K.

Based on this shooting illumination data, the CPU 23 generates control data for controlling the illuminating devices 27 so that illuminating light having ordinary illumination intensity and an illumination color temperature of about 7,000 K (represented by a point (C) on the xy chromaticity graph of Fig. 11) is emitted from the illuminating devices ID9 to ID18, which emit light from above on the back wall of the image display device 25, and from the illuminating devices ID53 to ID62, which emit light on the ceiling wall of the image display device 25, that illuminating light having low illumination intensity and an illumination color temperature of about 7,000 K (represented by a point (C) on the xy chromaticity graph of Fig. 11) is emitted from the illuminating devices ID19 to ID26, which emit light from above on the right side wall of the image display device 25, and that illuminating light having rather low illumination intensity and an illumination color temperature of about 5,000 K (represented by a point (a) on the xy chromaticity graph of Fig. 11) is emitted from the illuminating devices ID31 to ID37, which emit light from below on the left side wall of the image display device 25.

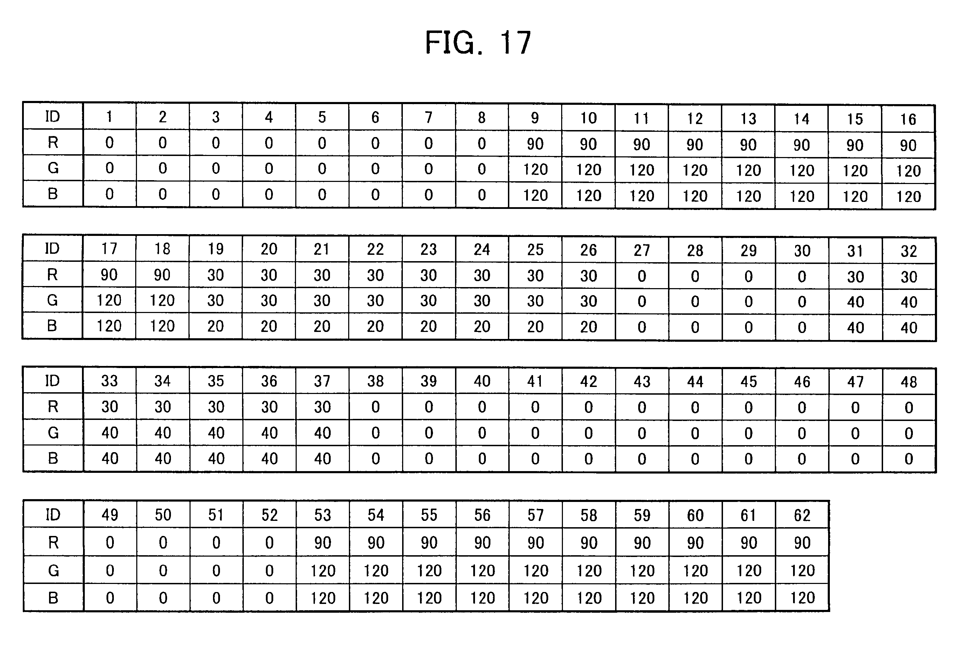

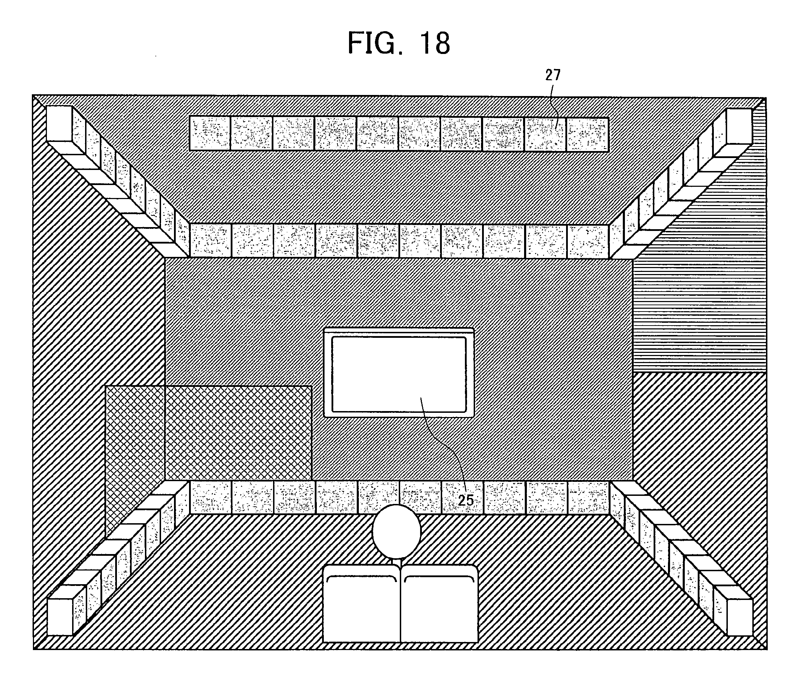

Receiving the control data from the CPU 23, the illumination control data generating portion 24 outputs illumination control data (RGB data) shown in Fig. 17. As a result, proper illuminating light is emitted on the ceiling, the back wall, and the left/right side walls of the image display device 25, as shown in Fig. 18. This reproduces an illumination environment at the time of shooting of the above display image scene in an audio-visual space, thus improves the feeling of being at a live performance at image viewing.

As described above, in the present embodiment, illuminating light from the illuminating devices 27 can be controlled using illumination control data which is obtained from various data contents that are input as shooting illumination data together with image data to properly reproduce an illumination condition (atmosphere) at the time of shooting of each scene. This achieves natural audio-visual environment illumination not accompanying unpleasantness without being affected by image contents, and improves the feeling of being at a live performance at image viewing.

In the present embodiment, shooting illumination data on an illumination condition at the time of shooting of each scene is received and transmitted. This enables audio-visual environment illumination control that is adapted to a variety of audio-visual environment spaces. Specifically, inputting data on audio-visual spaces and the illuminating devices, such as the number, arrangement, etc., of the illuminating devices, to the CPU 23 in advance enables the CPU 23 to generate proper control data corresponding to individual image audio-visual space from shooting illumination data received by the CPU 23.

If only one illuminating device is provided or each of a plurality of illuminating devices can not be controlled independently, for example, audio-visual environment illumination is controlled using only the data on key light. In this manner, received shooting illumination data is selected and processed properly according to an audio-visual space and the illuminating devices and audio-visual environment illumination is controlled to achieve an optimum image audio-visual space. In this case, shooting illumination data can be selected and processed easily to extract necessary data if illumination condition data on each of key light, fill light, touch light, and base light is transmitted and received as data having a layer structure.

In the first embodiment of the present invention, description is made on a case where audio-visual environment illumination is controlled using only the shooting illumination data contained in broadcasting data. To achieve more proper control over audio-visual environment illumination, however, audio-visual environment illumination may be controlled also using image data and/or audio data in addition to shooting illumination data. This case will be described as a second embodiment of the present invention.

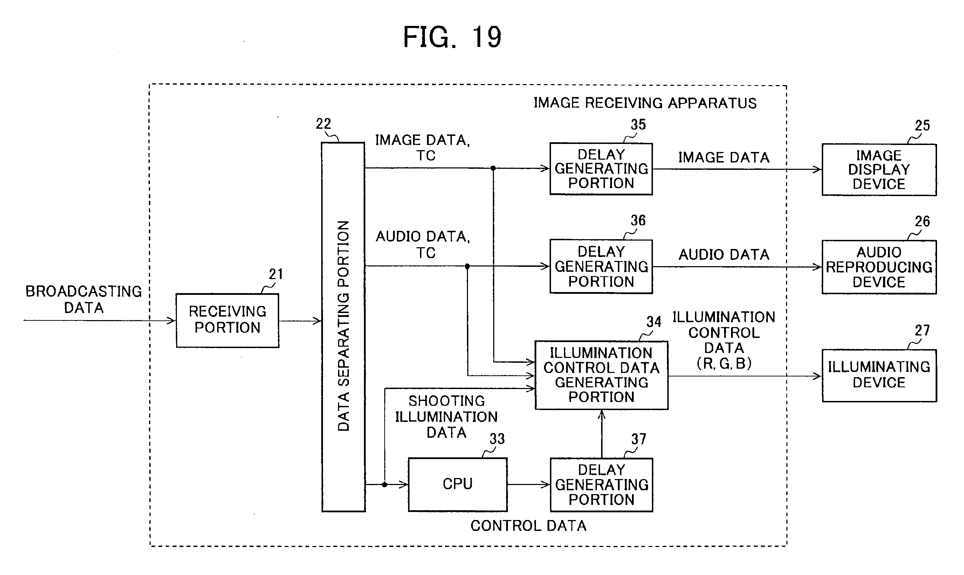

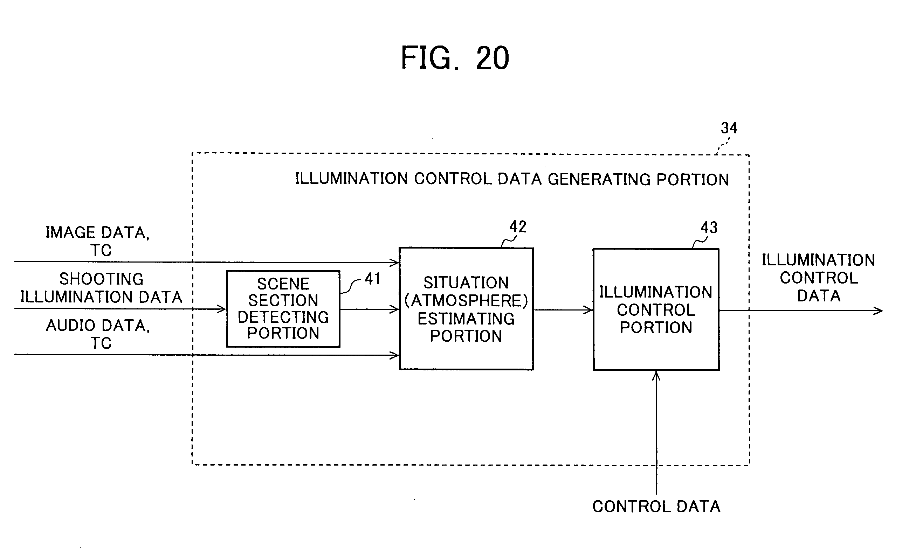

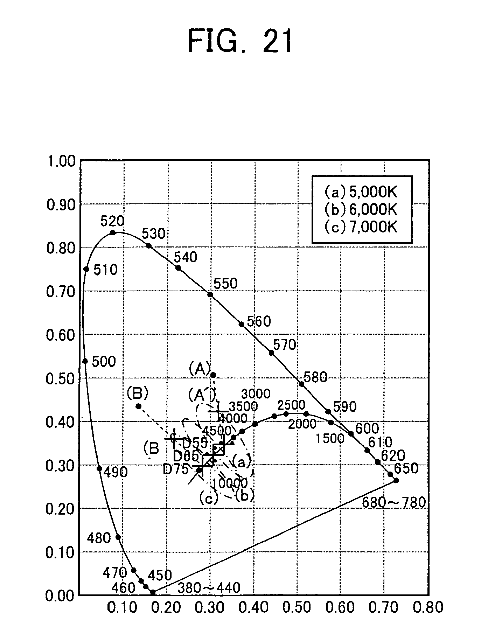

The second embodiment of the audio-visual environment control system of the present invention will be described in detail with reference to Figs. 19 to 21, in which the same components as described in the first embodiment are denoted by the same reference numerals, and are omitted in further description. Fig. 19 is a block diagram of a schematic configuration of the essential parts of an image receiving apparatus in the audio-visual environment control system according to the second embodiment of the present invention, Fig. 20 is a block diagram of an illumination control data generating portion of Fig. 19, and Fig. 21 is an explanatory view of a color reproduction range of illuminating light in the audio-visual environment control system of the second embodiment of the present invention.

The image transmission device (data transmission device) of the second embodiment is the same as that of the first embodiment described in Fig. 3, and is omitted in further description.

As shown in Fig. 19, the image receiving apparatus (data receiving apparatus) of the second embodiment includes the receiving portion 21 that receives, demodulates input broadcasting data from a transmission path and corrects errors in the data, the data separating portion 22 that separates and extracts image data and a TC (Time code) to be output to the image display device 25, audio data and a TC (Time Code) to be output to the audio reproducing device 26, and shooting illumination data as additional data, respectively, from output data from the receiving portion 21, a CPU 33 that receives shooting illumination data separated at the data separating portion 22 and outputs control data adapted to an illumination condition at the time of shooting of each of scenes making up the image data, an illumination control data generating portion 34 that outputs illumination control data (RGB data) corresponding to control data from the CPU 33 to the illuminating devices 27 that illuminate an audio-visual environment space, and delay generating portions 35, 36, and 37 that output image data, audio data, and control data in a delay equal to a processing time spent at the illumination control data generating portion 34.

Based on shooting illumination data, the CPU 33 of the present embodiment determines the intensity and color temperature (a point on the black locus) of illuminating light for each illuminating device ID, determines data indicating a given color range including the color temperature (function that represents a range indicated by a single-dot-dash line on the xy chromaticity graph of Fig. 21), and outputs the determined data as control data. The illumination control data generating portion 34 then corrects a situation (atmosphere) estimation result that is obtained based on image data and audio data to place the scene estimation result within the color range that is determined based on the shooting illumination data, and outputs illumination control data (RGB).

A time code (TC) is additional data that indicates respective reproduction times of image and audio data, and is, for example, composed of data indicating hours, minutes, seconds, and frames of image data.

As shown in Fig. 20, the illumination control data generating portion 34 of the present embodiment has a scene section detecting portion 41 that detects the starting point TC and the ending point TC of a scene section based on shooting illumination data, a situation (atmosphere) estimating portion 42 that estimates the illumination condition and scene situation (atmosphere) of a shooting scene based on image data and audio data output for a given time from the starting point TC of the scene section, and an illumination control portion 43 that outputs illumination control data for controlling the illuminating devices 27 based on an estimation result from the situation (atmosphere) estimating portion 42 and control data output from the CPU 33.

Various techniques including known one may be used as an estimating method for estimating an ambient light condition at the time of shooting by the situation (atmosphere) estimating portion 42. In this embodiment, the characteristic quantity of audio data is used in addition to the characteristic quantity of image data for estimation of the situation (atmosphere) of each scene. This is for an improvement in the precision of situation (atmosphere) estimation, and the situation (atmosphere) of a shooting scene may be estimated from the characteristic quantity of image data only.

In determining the characteristic quantity of image data, for example, color signals and luminance signals in a given area on a screen may be directly used as the characteristic quantity of image data in the same manner as described in the above conventional example, or the color temperature of ambient light at the time of shooting may be determined from these color signals and luminance signals to be used as the characteristic quantity. These color and luminance signals and color temperature may be output in a switching manner as the characteristic quantity of image data. The volume, audio frequency, etc., may be used as the characteristic quantity of audio data.

The situation (atmosphere) estimating portion 42 estimates the color and brightness of ambient light at the time of shooting based on the characteristic quantity of image data and audio data. If the estimated color of ambient light is out of a given color range derived from shooting illumination data, the illumination control portion 43 corrects the ambient light color to be able to obtain illumination control data adapted to an illumination condition at the time of shooting of each scene.

For example, when the result of estimation of the color of ambient light by the situation (atmosphere) estimating portion 42 is represented by a point (A) on the xy chromaticity graph of Fig. 21 and an illumination color temperature indicated by control data output from the CPU 33 is represented by a point (a) on the xy chromaticity graph of Fig. 21, the illumination control portion 43 finds an intersection (A') between the straight line connecting the point (A) to the point (a) on the xy chromaticity graph and a function indicating a color range whose center is the point (a) (function that represents an ellipse indicated by a single-dot-dash line on an xy chromaticity graph of Fig. 21), and determines a color indicated by the intersection (A') to be the color of audio-visual environment illuminating light.

Likewise, when the result of estimation of the color of ambient light by the situation (atmosphere) estimating portion 42 is represented by a point (B) on the xy chromaticity graph of Fig. 21 and an illumination color temperature indicated by control data output from the CPU 33 is represented by a point (c) on the xy chromaticity graph of Fig. 21, the illumination control portion 43 finds an intersection (B') between the straight line connecting the point (B) to the point (c) on the xy chromaticity graph and a function indicating a color range whose center is the point (c) (function that represents an ellipse indicated by a single-dot-dash line on the xy chromaticity graph of Fig. 21), and determines a color indicated by the intersection (B') to be the color of audio-visual environment illuminating light.

The result of estimation of the brightness of ambient light by the situation (atmosphere) estimating portion 42 is properly corrected in correspondence to illumination intensity indicated by control data output from the CPU 33. When the result of estimation of ambient light by the situation (atmosphere) estimating portion 42 is within a given illumination range determined from shooting illumination data, the result of estimation of ambient light by the situation (atmosphere) estimating portion 42 is output as it is to the illuminating devices 27 as illumination control data.

In the above case, illumination control data to be output to the illuminating devices 27 is obtained from an intersection on the xy chromaticity graph between a straight line connecting an estimation result by the situation (atmosphere) estimating portion 42 to a illumination color temperature indicated by control data output from the CPU 33 and a function representing a color range indicated by control data output from CPU 33. A method of obtaining illumination control data is not limited to this one. For example, illumination control data may be obtained on the xy chromaticity graph, from a point within a given color range from which point the distance to an estimation result by the situation (atmosphere) estimating portion 42 is the minimum, or from a point within the given color range at which point a color difference ΔE between the point and the estimation result by the situation (atmosphere) estimating portion 42 is the minimum.

The average or weighted average of an estimation result by the situation (atmosphere) estimating portion 42 and an illumination color temperature and illumination intensity indicated by control data output from the CPU 33 may simply be determined to be illumination control data to be output to the illuminating devices 27. The above illumination control data is, of course, generated for each illuminating device ID.

As described above, in the present embodiment, audio-visual environment illumination is controlled using shooting illumination data, image data, and/or audio data. This enables more precise estimation of an illumination environment even in estimation of an illumination environment that is difficult to estimate from shooting illumination data only, by using a situation (atmosphere) estimation result based on the characteristic quantity of image data and/or audio data, thus enables more proper illumination control. The present embodiment also suppresses execution of illumination control hampering the feeling of being at a live performance or atmosphere that is caused by an erroneous estimation of a situation (atmosphere) based on the characteristic quantity of image data and/or audio data, and thus, constantly offers an optimum audio-visual environment.

According to the present embodiment, the scene section detecting portion 41 that detects a scene section based on shooting illumination data is provided to control illumination control data in data switchover on a scene-to-scene basis. This prevents the feeling of being at a live performance from being spoiled due to a violent change of audio-visual environment illumination in the same scene.

In the present embodiment, data indicating a given color range including the color temperature of illuminating light (function representing a range indicated by a single-dot-dash line on the xy chromaticity graph of Fig. 21) is determined based on shooting illumination data. The size of the given color range may be determined variably by a user. The larger the given color range is determined, the bigger the effect is to reproduce the expanse of a screen, and the smaller the given color range is determined, the bigger the effect is to reproduce an illumination environment at the time of shooting. A user, therefore, may variably determine the size of the color range obtained from shooting illumination data, depending on which illumination effect the user attaches importance to.

Which of the effect of reproducing the expanse of the screen and the effect of reproducing the illumination environment at the time of shooting is preferable varies depending on image contents displayed by the image display device 25. The size of the given color range obtained from shooting illumination data, therefore, may be variably determined according to the result of determination on the type (e.g., genre) of the image contents.

In the above first and second embodiments, description is made on the case where shooting illumination data is multiplexed and added to broadcasting data to be transmitted. When shooting illumination data is not added to broadcasting data, transmitting/receiving shooting illumination data corresponding to displayed image data to/from an external server, etc., enables achievement of an optimum audio-visual environment corresponding to an illumination condition at the time of shooting. This case will then be described.

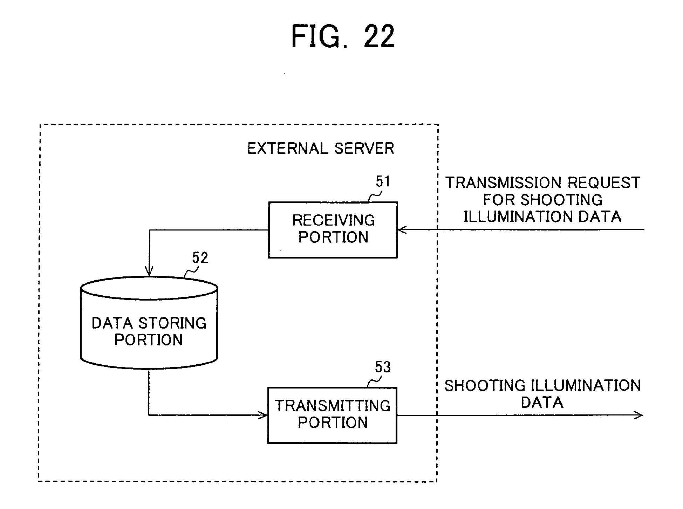

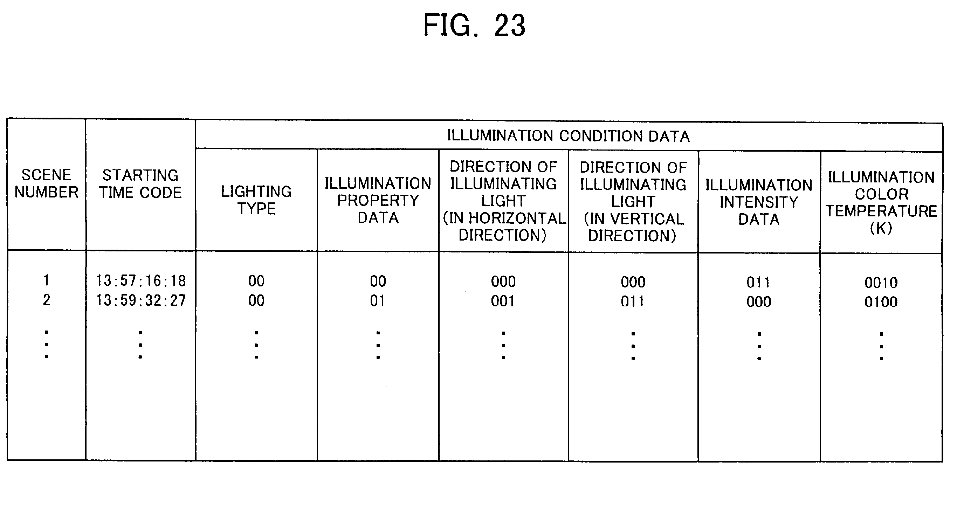

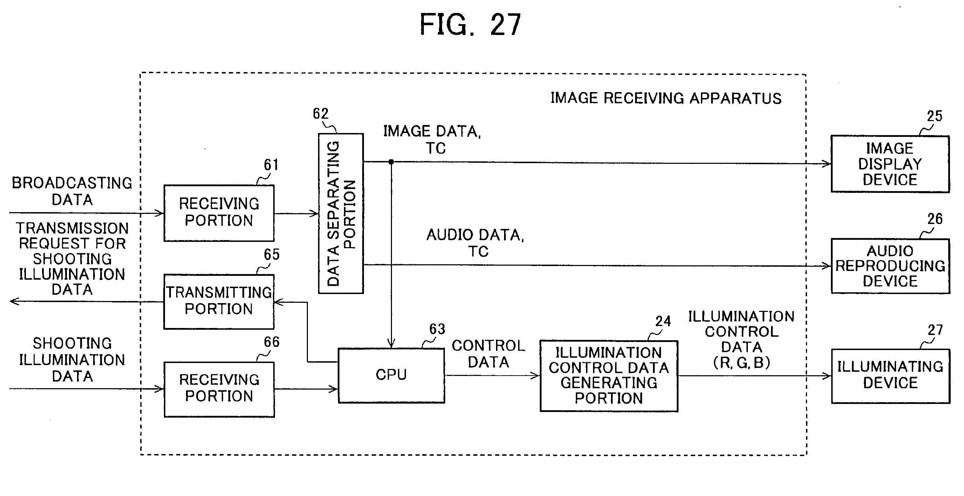

A third embodiment of the audio-visual environment control system of the present invention will be described in detail with reference to Figs. 22 to 27, in which the same components as described in the first embodiment are denoted by the same reference numerals, and are omitted in further description. Fig. 22 is a block diagram of a schematic configuration of the essential parts of an external server in the audio-visual environment control system according to the third embodiment, Figs. 23 to 26 are explanatory views of examples of shooting illumination data storage tables in the audio-visual environment control system of the third embodiment, and Fig. 27 is a block diagram of a schematic configuration of a principal part of an image receiving apparatus in the audio-visual environment control system of the third embodiment.

As shown in Fig. 22, the external server (data transmission device) of the present embodiment includes a receiving portion 51 that receives a transmission request for shooting illumination data on specific image data (contents), the request being sent from an image receiving apparatus (data receiving apparatus), a data storing portion 52 that stores shooting illumination data for each of image data (contents), and a transmitting portion 53 that transmits the requested shooting illumination data to the image receiving apparatus (data receiving apparatus) that issued the request.

Shooting illumination data stored in the data storing portion 52 of the present embodiment are written in a table format, where shooting illumination data are linked to scene numbers and scene starting time codes of image scenes, as shown in Figs. 23 to 26. The transmitting portion 53 transmits requested shooting illumination data corresponding to specific image data (program contents) together with scene numbers and scene starting TCs (Time Codes) of scenes making up the image data, to the image receiving apparatus that issued the request.

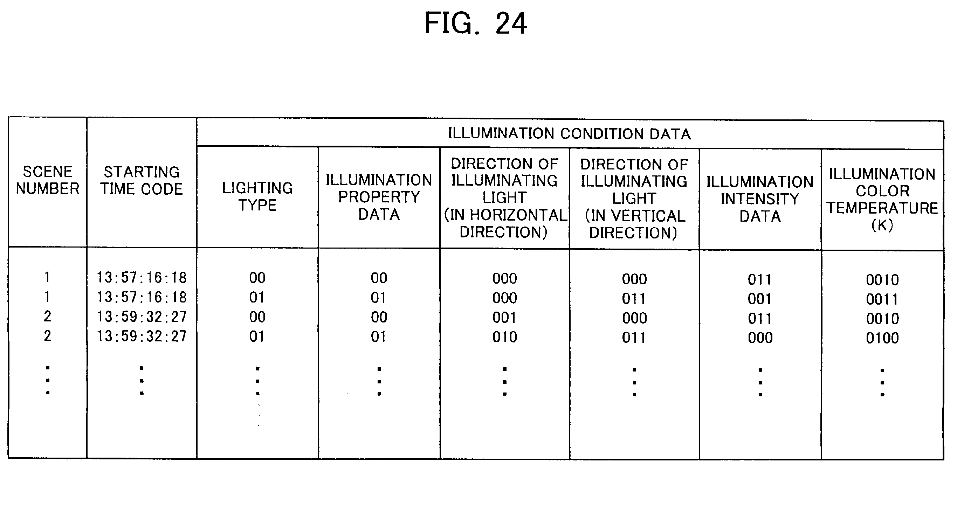

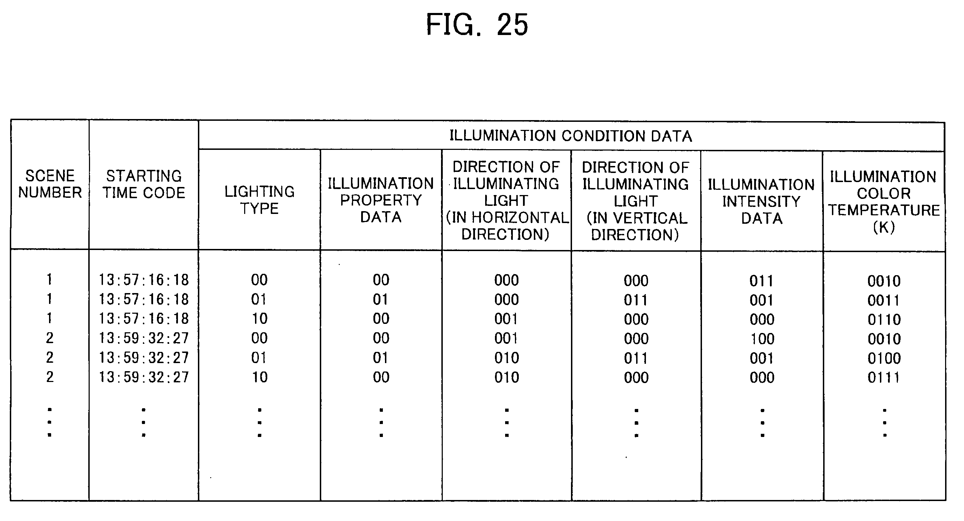

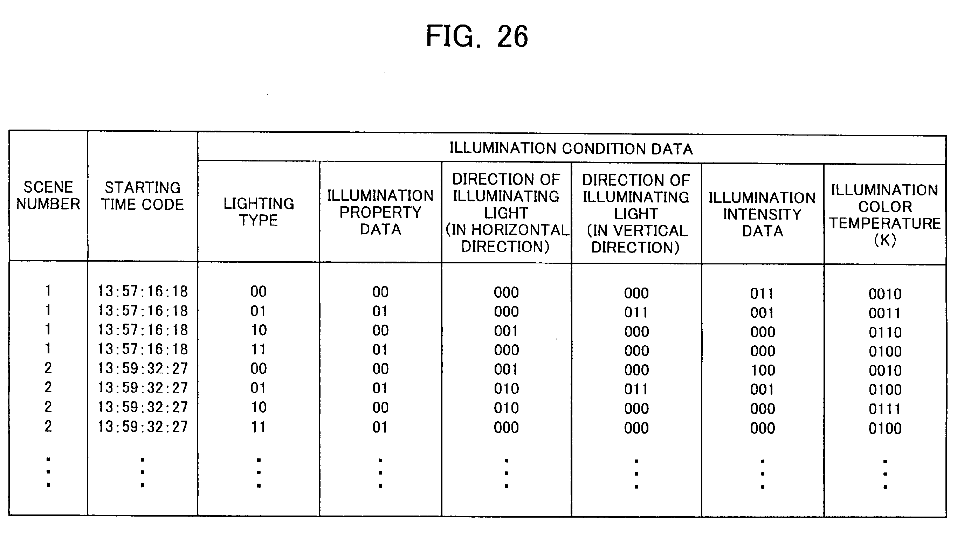

To deal with various audio-visual environment spaces, four types of shooting illumination data tables are provided, which consist of a data table containing a description of data on key light only, as shown in Fig. 23, a data table containing a description of data on key light and fill light, as shown in Fig. 24, a data table containing a description of data on key light, fill light, and touch light, as shown in Fig. 25, and a data table containing a description of data on key light, fill light, touch light, and base light, as shown in Fig. 26. Any one of these data tables is transmitted to the image receiving apparatus in response to a transmission request from the image receiving apparatus.

The data table of Fig. 26 that contains the description of data on key light, fill light, touch light, and base light may solely be provided so that only the necessary data is selected, processed, and transmitted to the image receiving apparatus in response to a transmission request from the image receiving apparatus.

The image receiving apparatus (data receiving apparatus) that receives shooting illumination data sent from the external server to control audio-visual environment illumination will then be described. As shown in Fig. 27, the image receiving apparatus of the present embodiment includes a receiving portion 61 that receives, demodulates input broadcasting data from a transmission path and corrects errors in the data, a data separating portion 62 that separates and extracts image data output to the image display device 25 and audio data output to the audio reproducing device 26, respectively, from output data from the receiving portion 61, a transmitting portion 65 that sends a transmission request for shooting illumination data corresponding to displayed image data (contents) to the external server (data transmission device) via a communication network, and a receiving portion 66 that receives the requested shooting illumination data sent from the external server via the communication network.

The image receiving apparatus further includes a CPU 63 that stores therein the shooting illumination data received by the receiving portion 66 and in synchronization with timing to display each scene of image data, outputs control data on illumination intensity and color temperature for each illuminating device ID that is obtained from shooting illumination data for the image scene, and the illumination control data generating portion 24 that outputs illumination control data (RGB data) corresponding to control data output from the CPU 63 to the illuminating devices 27 that illuminate an audio-visual environment space.

Specifically, the CPU 63 compares the starting time code of each scene on a shooting illumination data storage table which is sent from the external server and is stored inside the CPU 63, with the time code of image data to be displayed on the image display device 25, and when both time codes are identical, the CPU 63 reads out the shooting illumination data corresponding to the time codes, and then, based on this shooting illumination data, outputs control data adapted to the scene situation (atmosphere) of a display image scene.

In this manner, even when shooting illumination data is not added to broadcasting data, shooting illumination data corresponding to displayed image data (program contents) is obtained from the external server and illumination control data can be generated based on this shooting illumination data. In addition, timing of switchover of image scene display can be synchronized with timing of switchover of audio-visual environment illumination in a simple configuration. This enables achievement of an optimum audio-visual environment corresponding to an illumination condition at the time of shooting.

In the third embodiment of the present invention, description is made on the case where only the received shooting illumination data from the external server is used to control audio-visual environment illumination. To achieve more proper control over audio-visual environment illumination, audio-visual environment illumination may be controlled by using image data and/or audio data in addition to shooting illumination data. This case will then be described as a fourth embodiment of the present invention.

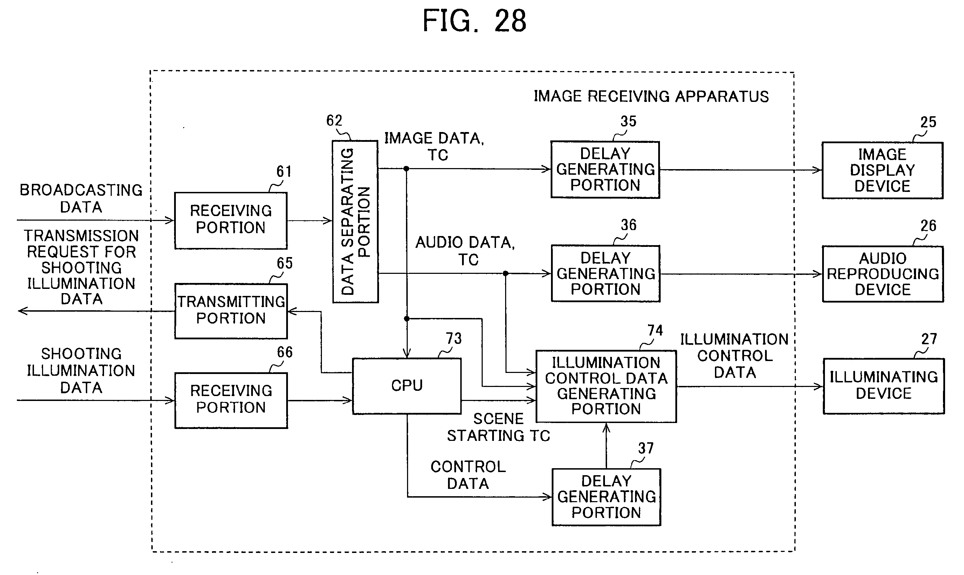

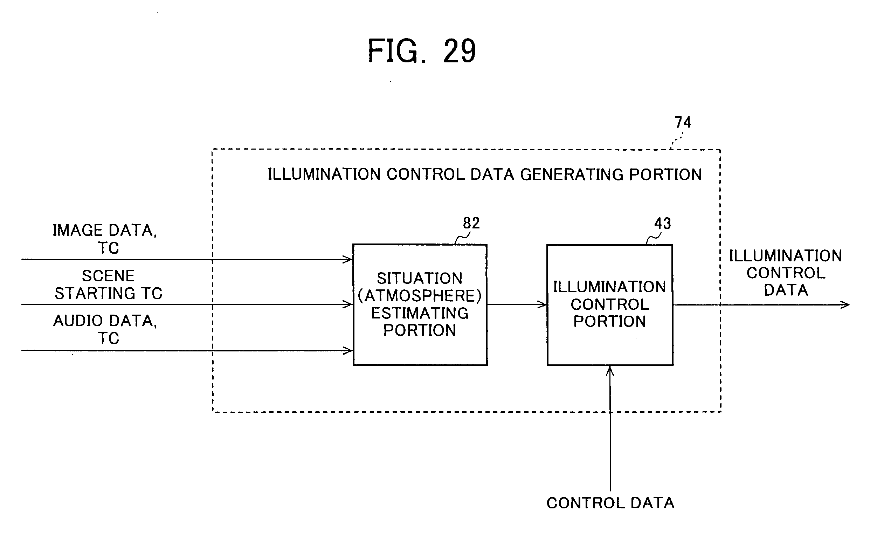

The fourth embodiment of the audio-visual environment control system of the present invention will be described in detail with reference to Figs. 28 and 29, in which the same components as described in the second and third embodiments are denoted by the same reference numerals, and are omitted in further description. Fig. 28 is a block diagram of a schematic configuration of a principal part of an image receiving apparatus in the audio-visual environment control system according to the fourth embodiment, and Fig. 29 is a block diagram of an illumination control data generating portion in Fig. 28.

The external server (data transmission device) of the fourth embodiment is the same as the external server of the third embodiment described in Fig. 22, and is omitted in further description.

As shown in Fig. 28, an image receiving apparatus (data receiving apparatus) of the present embodiment includes the receiving portion 61 that receives and demodulates input broadcasting data from a transmission path, a data separating portion 62 that separates and extracts image data output to the image display device 25 and audio data output to the audio reproducing device 26, from output data from the receiving portion 61, a transmitting portion 65 that sends a transmission request for shooting illumination data corresponding to display image data (contents) to the external server (data transmission device) via a communication network, and a receiving portion 66 that receives the requested shooting illumination data sent from the external server via the communication network.

The image receiving apparatus further includes a CPU 73 that stores therein shooting illumination data received by the receiving portion 66 and outputs control data on illumination intensity, color temperature, and color range for each illuminating device ID which are obtained from shooting illumination data for the image scene and a scene starting point time code in synchronization with timing to display each scene of image data, an illumination control data generating portion 74 that outputs illumination control data (RGB data) corresponding to control data output from the CPU 73 to the illuminating device 27 that illuminates an audio-visual environment space, and the delay generating portions 35, 36, and 37 that output image data, audio data, and control data with a delay equal to a processing time spent at the illumination control data generating portion 74.

The CPU 73 of the present embodiment obtains the intensity and color temperature (a point on the black track) of illuminating light for each illuminating device ID based on shooting illumination data, determines data indicating a given color range including the color temperature (function that represents a range indicated by a single-dot-dash line on the xy chromaticity graph of Fig. 21), and outputs the illuminating light intensity, color temperature, and color range data as control data. The illumination control data generating portion 74 then corrects a situation (atmosphere) estimation result that is obtained based on image data and audio data to be within the color range that is determined based on the shooting illumination data, and outputs illumination control data (RGB data).

As shown in Fig. 29, the illumination control data generating portion 74 of the present embodiment has a situation (atmosphere) estimating portion 82 that estimates the illumination condition and scene situation (atmosphere) of a shooting scene based on image data and audio data output for a given time from the scene starting point TC that is sent from the CPU 73, and the illumination control portion 43 that outputs illumination control data for controlling the illuminating devices 27, based on an estimation result from the situation (atmosphere) estimating portion 82 and control data output from the CPU 73.

The situation (atmosphere) estimating portion 82 estimates the color and brightness of ambient light at the time of shooting based on the characteristic quantity of image data and audio data. If the estimated color of ambient light is out of a given color range obtained from shooting illumination data, the illumination control portion 43 corrects the ambient light color to be able to obtain illumination control data appropriate to an illumination condition at the time of shooting of each scene.

As described above, in the present embodiment, even when shooting illumination data is not added to broadcasting data, shooting illumination data corresponding to displayed image data (program contents) is obtained from the external server to control audio-visual environment illumination using this shooting illumination data and image data and/or audio data. This enables illumination control that takes account of the result of estimation of a situation (atmosphere) based on the characteristic quantity of image data and/or audio data in addition to shooting illumination data, and suppresses execution of illumination control hampering the feeling of being at a live performance or atmosphere that is caused by an erroneous estimation of a situation (atmosphere) based on the characteristic quantity of image data and/or audio data, thus constantly offers an optimum audio-visual environment.

According to the present embodiment, illumination control data is controlled in data switchover on a scene-to-scene basis based on scene starting time codes on the shooting illumination data storage table. This prevents the feeling of being at a live performance from being spoiled due to a violent change of audio-visual environment illumination in the same scene.

In the present embodiment, data indicating a given color range including the color temperature of illuminating light (function representing a range indicated by a single-dot-dash line on the xy chromaticity graph of Fig. 21) is determined based on shooting illumination data. The size of the given color range may be determined variably by a user. The larger the given color range is determined, the bigger the effect is to reproduce the expanse of a screen, and the smaller the given color range is determined, the bigger the effect is to reproduce an illumination environment at the time of shooting. The user, therefore, may variably determine the size of the color range obtained from shooting illumination data, depending on which of the illumination effects the user emphasizes.

Which of the effect of reproducing the expanse of the screen and the effect of reproducing the illumination environment at the time of shooting is preferable varies depending on image contents displayed by the image display device 25. The size of the given color range derived from shooting illumination data, therefore, may be variably determined according to the result of determination on the type (e.g., genre) of the image contents.

The audio-visual environment control device, audio-visual environment control method, and the audio-visual environment control system of the present invention may be realized in various embodiments without deviating from the substance of the present invention. For example, the audio-visual environment control device may be incorporated in the image display device, where the audio-visual environment control device is, of course, capable of controlling external lighting equipment based on various data contained in input image data.

The above described shooting illumination data is not limited to be obtained from the external server or by separating from broadcasting data. For example, when image data reproduced by external equipment (DVD player, blu-ray disc player, etc.) is displayed, shooting illumination data added to a recording medium may be read out to be used.

## Claims

1. A data transmission device that transmits image data composed of one or more scenes, wherein the shooting illumination data indicative of an illumination condition at the time of shooting of each of scenes of the image data is added to the image data and transmitted.

2. The data transmission device as defined in claim 1, wherein
the shooting illumination data is added to the image data scene by scene.

3. The data transmission device as defined in claim 1, wherein
the shooting illumination data is added to the image data shot by shot.

4. The data transmission device as defined in claim 1, wherein
the shooting illumination data is added to the image data frame by frame.

5. The data transmission device as defined in any one of claims 1 to 4, wherein
the shooting illumination data at least contains data indicating a lighting type of illumination used for shooting of each scene.

6. The data transmission device as defined in any one of claims 1 to 5, wherein
the shooting illumination data at least contains data indicating a property of illumination used for shooting of each scene.

7. The data transmission device as defined in any one of claims 1 to 6, wherein
the shooting illumination data at least contains data indicating a direction of light of illumination used for shooting of each scene.

8. The data transmission device as defined in any one of claims 1 to 7, wherein
the shooting illumination data at least contains data indicating intensity of light of illumination used for shooting of each scene.

9. The data transmission device as defined in any one of claims 1 to 8, wherein
the shooting illumination data at least contains data indicating a chromaticity of light of illumination used for shooting of each scene.

10. A data transmission device that transmits shooting illumination data indicating an illumination condition at the time of shooting of each of scenes comprising image data on the reception of a transmission request from outside, wherein the shooting illumination data is transmitted together with data indicating a timing of start of each of scenes comprising the image data.

11. The data transmission device as defined in claim 10, wherein
the shooting illumination data at least contains data indicating a lighting type of illumination used for shooting of each scene.

12. The data transmission device as defined in claim 10 or 11, wherein
the shooting illumination data at least contains data indicating a property of illumination used for shooting of each scene.

13. The data transmission device as defined in any one of claims 10 to 12, wherein
the shooting illumination data at least contains data indicating a direction of light of illumination used for shooting of each scene.

14. The data transmission device as defined in any one of claims 10 to 13, wherein
the shooting illumination data at least contains data indicating intensity of light of illumination used for shooting of each scene.

15. The data transmission device as defined in any one of claims 10 to 14, wherein
the shooting illumination data at least contains data indicating a chromaticity of light of illumination used for shooting of each scene.

16. An audio-visual environment control device comprising:
a receiving means that receives image data to be displayed on a display device and shooting illumination data indicating an illumination condition at the time of shooting of each of scenes comprising the image data; and
a control means that controls illuminating light from an illuminating device arranged around the display device, based on the shooting illumination data.

17. The audio-visual environment control device as defined in claim 16, wherein
the control means controls illuminating light from the illuminating device by switching illuminating light scene by scene in the image data.

18. The audio-visual environment control device as defined in claim 16 or 17, wherein
the control means controls illuminating light from the illuminating device using also a characteristic quantity of the image data, in addition to the shooting illumination data.

19. The audio-visual environment control device as defined in any one of claims 16 to 18, wherein
the shooting illumination data at least contains data indicating a lighting type of illumination used for shooting of each scene.

20. The audio-visual environment control device as defined in any one of claims 16 to 19, wherein
the shooting illumination data at least contains data indicating a property of illumination used for shooting of each scene.

21. The audio-visual environment control device as defined in any one of claims 16 to 20, wherein
the shooting illumination data at least contains data indicating a direction of light of illumination used for shooting of each scene.

22. The audio-visual environment control device as defined in any one of claims 16 to 21, wherein
the shooting illumination data at least contains data indicating intensity of light of illumination used for shooting of each scene.

23. The audio-visual environment control device as defined in any one of claims 16 to 22, wherein
the shooting illumination data at least contains data indicating a chromaticity of light of illumination used for shooting of each scene.

24. An audio-visual environment control system comprising the audio-visual environment control device as defined in any one of claims 16 to 23, and an illuminating device that is controlled by the audio-visual environment control device in emission of audio-visual environment illuminating light.

25. A data transmission method for transmitting image data composed of one or more scenes, wherein shooting illumination data indicating an illumination condition at the time of shooting of each of scenes of the image data is added to the image data and transmitted.

26. A data transmission method for transmitting shooting illumination data indicative of an illumination condition at the time of shooting of each of scenes comprising image data on the reception of a request from outside, wherein the shooting illumination data is transmitted together with data indicating a timing to start of each of scenes comprising the image data.

27. An audio-visual environment control method that receives image data to be displayed on a display device and shooting illumination data indicative of an illumination condition at the time of shooting of each of scenes comprising the image data and controls illuminating light from an illuminating device disposed around the display device based on the shooting illumination data.
